(19)

**Europäisches Patentamt**
**European Patent Office**
**Office européen des brevets**

(11) **EP 4 667 916 A1**

(12) **EUROPEAN PATENT APPLICATION**

(43) Date of publication:
**24.12.2025 Bulletin 2025/52**

(21) Application number: **25159904.9**

(22) Date of filing: **25.02.2025**

(51) International Patent Classification (IPC):
**G01N 21/88** (2006.01)    **G01N 21/89** (2006.01)

(52) Cooperative Patent Classification (CPC):
**G01N 21/8806; G01N 21/8903;** G01N 2021/8822;
G01N 2021/8825; G01N 2021/8845;
G01N 2021/8902

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.06.2024 JP 2024098173**

(71) Applicants:
• **Kabushiki Kaisha Toshiba**
  **Tokyo 105-0023 (JP)**
• **Toshiba Information Systems (Japan)**
  **Corporation**
  **Kawasaki-shi, Kanagawa 210-8540 (JP)**

(72) Inventors:
• **OHNO, Hiroshi**
  **Minato-ku, Tokyo, 105-0023 (JP)**

• **KANO, Hiroya**
  **Minato-ku, Tokyo, 105-0023 (JP)**
• **KAMIKAWA, Takahiro**
  **Minato-ku, Tokyo, 105-0023 (JP)**
• **OKANO, Hideaki**
  **Minato-ku, Tokyo, 105-0023 (JP)**
• **TAKANASHI, Kenta**
  **Minato-ku, Tokyo, 105-0023 (JP)**
• **OHNO, Akifumi**
  **Kawasaki-shi, Kanagawa, 210-8540 (JP)**
• **SUZUKI, Sayuri**
  **Kawasaki-shi, Kanagawa, 210-8540 (JP)**
• **TAKAGI, Yoshiaki**
  **Kawasaki-shi, Kanagawa, 210-8540 (JP)**
• **KAWASAKI, Akio**
  **Kawasaki-shi, Kanagawa, 210-8540 (JP)**

(74) Representative: **Hoffmann Eitle**
**Patent- und Rechtsanwälte PartmbB**
**Arabellastraße 30**
**81925 München (DE)**

(54) **OPTICAL APPARATUS, OPTICAL INSPECTION SYSTEM, AND OPTICAL INSPECTION METHOD**

(57)    According to an arrangement, an optical apparatus includes: a light emission portion configured to emit light; an image-forming optical element array; and first and second wavelength emission surfaces. The image-forming optical element array includes first and second image-forming optical elements. The second wavelength emission surface is arranged at a position different from the first wavelength emission surface. The first and second wavelength emission surface respectively include: a first wavelength emission region configured to emit by the light, light of a first wavelength spectrum toward the image-forming optical element array; and a second wavelength emission region configured to emit by the light, light of a second wavelength spectrum toward the image-forming optical element array. The first wavelength emission surface is positioned at a focal plane of the first image-forming optical element. The second wavelength emission surface is positioned at a focal plane of the second image-forming optical element.

F I G. 1

## Description

FIELD

The present disclosure relates to an optical apparatus, an optical inspection system, and an optical inspection method.

BACKGROUND

In various industries, it is important to acquire information of an object surface such as surface measurement and surface inspection of an object in a noncontact manner. For example, there is a method of acquiring detailed information of an object by illuminating the object with light color-coded for each direction, and acquiring reflected light and transmitted light using an image sensor.

BRIEF DESCRIPTION OF THE DRAWINGS

FIG. 1 is a schematic cross-sectional view of an optical apparatus according to a first arrangement.
FIG. 2 is a schematic cross-sectional view of an optical apparatus according to a first modification of the first arrangement.
FIG. 3 is a schematic cross-sectional view of an optical apparatus according to a second modification of the first arrangement.
FIG. 4 is a schematic cross-sectional view of an optical apparatus according to a third modification of the first arrangement.
FIG. 5 is a schematic cross-sectional view of an optical apparatus according to a fourth modification of the first arrangement.
FIG. 6 is a schematic perspective view of a wavelength emission surface and an image-forming optical element array according to a fifth modification of the optical apparatus according to the first arrangement.
FIG. 7 is a schematic perspective view of a wavelength emission surface and an image-forming optical element array according to a sixth modification of the optical apparatus according to the first arrangement.
FIG. 8 is a schematic cross-sectional view of an optical inspection system according to a second arrangement.
FIG. 9 is a diagram illustrating a processing flow of an optical inspection using the optical inspection apparatus illustrated in FIG. 8.
FIG. 10 is a schematic cross-sectional view of an optical inspection system according to a modification of the second arrangement.
FIG. 11 is a schematic cross-sectional view of an optical inspection system according to a third arrangement.
FIG. 12 is a schematic perspective view illustrating a relationship between an illumination opening and the image-forming optical element array in FIG. 11.
FIG. 13 is a schematic perspective view illustrating a relationship among the illumination opening and the image-forming optical element array in FIG. 12 and a wavelength emission surface.

DETAILED DESCRIPTION

Hereinafter, arrangements will be described with reference to the drawings. The drawings are schematic or conceptual, and the relationship between the thickness and width of each portion, the ratio of sizes between portions, and the like are not necessarily the same as actual ones. In addition, even in the case of representing the same portions, their dimensions and ratios may be represented differently from each other in the drawings. In the present specification and each drawing, the same elements as those described above with respect to the previously described drawings are denoted by the same reference numerals, and detailed description thereof is omitted as appropriate.

In the present specification, black-and-white projection and color projection are described as projection. However, "color projection" is used to mean that a video is projected, and both (black-and-white projection and color projection) are used separately.

In the present specification, light is a type of electromagnetic wave, and includes X-rays, ultraviolet rays, visible light, infrared rays, microwaves, and the like. In the present arrangement, light is visible light, and the wavelength is in a region of 400 nm to 750 nm, for example.

It is an object of an arrangement to provide an optical apparatus, an optical inspection system, and an optical inspection method configured to acquire information of an object by irradiating the same irradiation field of the object with light of a plurality of wavelengths.

According to the arrangement, an optical apparatus includes: a light emission portion configured to emit light; an image-forming optical element array; and first and second wavelength emission surfaces. The image-forming optical element array includes at least a first image-forming optical element and a second image-forming optical element. The first wavelength emission surface includes: a first wavelength emission region that is configured to emit by the light, light of a first wavelength spectrum toward the image-forming optical element array; and a second wavelength emission region that is configured to emit by the light, light of a second wavelength spectrum different from the light of the first wavelength spectrum toward the image-forming optical element array. The second wavelength emission surface is arranged at a position different from the first wavelength emission surface and has the first wavelength emission region and the second wavelength emission region like the first wavelength emission surface. The first wavelength emission surface is positioned at or near a focal plane of the first image-forming optical element. The second wavelength emission surface is positioned at or near a focal plane of the second image-forming optical element.

According to the arrangement, an optical inspection system includes: the optical apparatus; an imaging portion including an image-forming optical element for imaging and an image sensor, and is configured to image an object; and a controller configured to control the image sensor. The controller is configured to acquire information of the object based on a light reception signal captured by the image sensor of the imaging portion.

According to the arrangement, an optical inspection method includes: emitting light of a first wavelength spectrum from a first-a wavelength emission region toward a first image-forming optical element of an image-forming optical element array; emitting light of a second wavelength spectrum different from the first wavelength spectrum from a first-b wavelength emission region toward the first image-forming optical element of the image-forming optical element array; emitting the light of the first wavelength spectrum from a second-a wavelength emission region different from the first-a wavelength emission region and the first-b wavelength emission region toward a second image-forming optical element different from the first image-forming optical element of the image-forming optical element array; emitting the light of the second wavelength spectrum from a second-b wavelength emission region different from the first-a wavelength emission region, the first-b wavelength emission region, and the second-a wavelength emission region toward the second image-forming optical element of the image-forming optical element array; and illuminating an object surface of an object with the light of the first wavelength spectrum and the light of the second wavelength spectrum that have passed through the first image-forming optical element, and the light of the first wavelength spectrum and the light of the second wavelength spectrum that have passed through the second image-forming optical element. The illuminating the object surface of the object includes irradiating a same first irradiation field with the light of the first wavelength spectrum and the light of the second wavelength spectrum that have passed through the first image-forming optical element.

(First Arrangement)

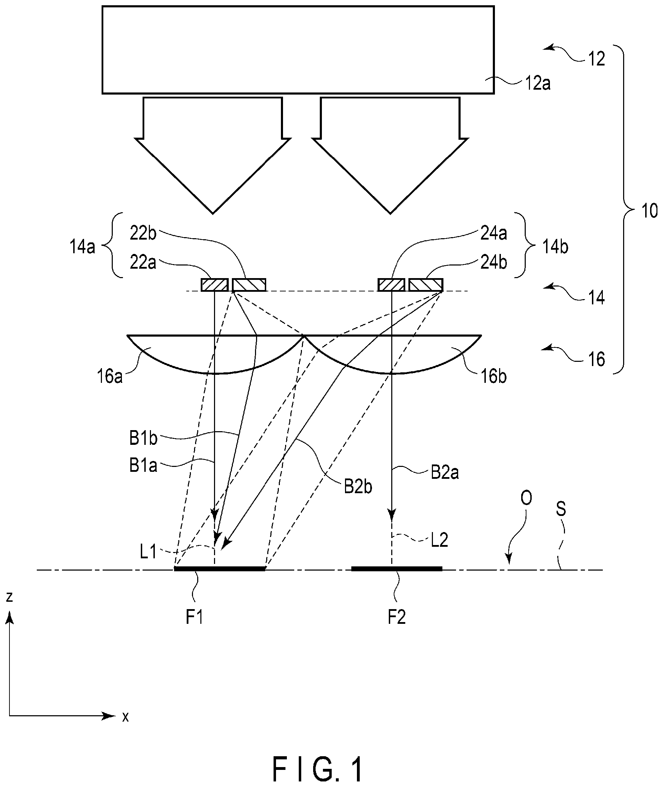

Hereinafter, an optical apparatus (illumination portion) 10 according to a first arrangement will be described in detail with reference to FIG. 1.

FIG. 1 is a schematic cross-sectional view of the optical apparatus 10 according to the present arrangement. The cross-sectional view of FIG. 1 is on an xz plane in an xyz orthogonal coordinate system, for example.

The optical apparatus 10 according to the present arrangement includes a light emission portion 12 and an image-forming optical element array 16.

The light emission portion 12 emits light having a plurality of wavelength-a and wavelength-b, for example, in a predetermined direction.

In the present arrangement, the light emission portion 12 has a wavelength emission surface 14 that emits light from the light emission portion 12. The wavelength emission surface 14 according to the present arrangement can be observed by light passing through each region in the surface when light is emitted from the light emission portion 12. The wavelength emission surface 14 is formed in a planar shape that emits light having a specific wavelength spectrum different for each region toward the image-forming optical element array 16. These regions of the wavelength emission surface 14 are defined in position by the image-forming optical element array 16. The wavelength emission surface 14 includes at least two surfaces, that is, a first wavelength emission surface 14a and a second wavelength emission surface 14b.

The image-forming optical element array 16 includes at least two image-forming optical elements 16a and 16b, and these image-forming optical elements 16a and 16b are adjacent along the x-axis direction.

The light from the light emission portion 12 illuminates an object surface S of an object O through the wavelength emission surface 14 and the image-forming optical element array 16. In the region illuminated on the object surface S, the irradiation fields facing the image-forming optical elements 16a and 16b will be referred to as irradiation fields F1 and F2, respectively. In the present arrangement, the object O has the object surface S that reflects light. However, the object O is not limited to this in the present arrangement, and the object O may be transparent or semitransparent to light and may transmit a part of the light.

The image-forming optical elements 16a and 16b have a function of collecting a light beam group emitted from a certain point to a conjugate image point. The image-forming optical elements 16a and 16b are lenses, for example. In FIG. 1, each of the image-forming lenses as the image-forming optical elements 16a and 16b is schematically shown as one lens, but may be a set lens including a plurality of lenses. Alternatively, the image-forming optical elements 16a and 16b may be concave mirrors, convex mirrors, or a combination thereof. That is, the image-forming optical elements 16a and 16b may be any optical elements as long as they have a function of collecting a light beam group emitted from a certain point to a conjugate image point.

Collecting (condensing) a light beam group emitted from an object point on an object surface by the image-forming optical elements 16a and 16b at an image point is referred to as image forming. Alternatively, it is also referred to transferring of the object point to an image point (conjugate point of the object point). In addition, a collection surface of conjugate points to which a light beam group emitted from a sufficiently distant object point is transferred by the image-forming optical elements 16a and 16b is called a focal plane of the image-forming optical element. In addition, a line orthogonal to the focal plane and passing through the centers of the image-forming optical elements 16a and 16b is defined as an optical axis. A conjugate image point emitted from a sufficiently distant point on the optical axis and transferred by the image-forming optical elements 16a and 16b is called a focal point.

The image-forming optical element array 16 includes at least two image-forming optical elements 16a and 16b as described above. In particular, if the image-forming optical elements 16a and 16b are lenses, the image-forming optical element array 16 is called a lens array. The lens array 16 may also be called a fly-eye lens array or a micro-lens array. Since the image-forming optical element array 16 has at least two image-forming optical elements 16a and 16b, it has at least two different optical axes L1 and L2. That is, the lens array 16 has a plurality of optical axes L1 and L2.

In the present arrangement, for example, convex lenses are used as the image-forming optical elements 16a and 16b, and the image-forming optical element array 16 is a lens array. The lens array 16 of the present arrangement is formed by arranging two convex lenses adjacent along the x-axis direction. These are referred to as first lens element 16a and second lens element 16b. The optical axes L1 and L2 of the lens elements 16a and 16b are included in the cross section of the optical apparatus 10 of FIG. 1, and they are parallel to the z axis. The optical axis L1 of the first lens element 16a is a first optical axis, and the optical axis L2 of the second lens element 16b is a second optical axis.

The first wavelength emission surface 14a is arranged on or near the focal plane of the first lens element 16a. The second wavelength emission surface 14b is arranged on or near the focal plane of the second lens element 16b. In the present arrangement, the focal planes of the first lens element 16a and second lens element 16b are on the same plane. Therefore, these focal planes are simply referred to as focal planes without distinction. However, the first lens element 16a and the second lens element 16b may have different focal planes. In this case, the first wavelength emission surface 14a and the second wavelength emission surface 14b are arranged on or near their respective focal planes.

The light emission portion 12 of the present arrangement may be a projector 12a as a projection portion that projects an image with light from the light emission portion 12, for example. The projector (projection portion) 12a projects similar images (projection light) onto the first wavelength emission surface 14a and the second wavelength emission surface 14b at the same period or the same time. That is, the light emission portion 12 projects light of a wavelength spectrum-a to a first-a wavelength emission region 22a and a second-a wavelength emission region 24a, and projects light of a wavelength spectrum-b to a first-b wavelength emission region 22b and a second-b wavelength emission region 24b. The projector 12a has a liquid crystal display (LCD) system, a digital lighting processing (DLP) system, or a liquid crystal on silicon (LCOS) system. In the LCD system, light from a light source is separated by a dichroic mirror, the separated light is transmitted through an LCD panel, and then the separated light is multiplexed again. In the DLP system, light from a light source is turned to light having a wavelength spectrum different for each time using a rotating color wheel, and the light is reflected by a digital micromirror device (DMD). However, in the DLP method, a plurality of light sources having different wavelength spectra may be prepared in advance so that the light of each wavelength spectrum is reflected by the DMD and then multiplexed without using a color wheel. In the LCOS system, light from a light source is separated by a dichroic mirror, the separated light is reflected by a reflective liquid crystal panel, and then the separated light is multiplexed again.

The projection portion included in the light emission portion 12 in the present arrangement is a DLP projector 12a. However, the projector 12a is not limited to these systems, and any system may be used as long as light of the wavelength spectrum-a is projected in the first-a wavelength emission region 22a and the second-a wavelength emission region 24a, and light of the wavelength spectrum-b is projected in the first-b wavelength emission region 22b and the second-b wavelength emission region 24b. When light is projected from the projector (projection portion) 12a, the first-a wavelength emission region 22a and the first-b wavelength emission region 22b are formed on the first wavelength emission surface 14a whose position is defined by the image-forming optical element 16a. The first-a wavelength emission region 22a passes the light of the wavelength spectrum-a having a wavelength-a as a main component (dominant wavelength). The first-b wavelength emission region 22b passes the light of the wavelength spectrum-b having a wavelength-b as a dominant wavelength. Similarly, when light is projected from the projector (projection portion) 12a, the second-a wavelength emission region 24a and the second-b wavelength emission region 24b are formed on the second wavelength emission surface 14b whose position is defined by the image-forming optical element 16b. The second-a wavelength emission region 24a passes the light of the wavelength spectrum-a having the wavelength-a as a main component (dominant wavelength). The second-b wavelength emission region 24b passes the light of the wavelength spectrum-b having the wavelength-b as a dominant wavelength. That is, the second wavelength emission surface 14b has the same wavelength emission region as the first wavelength emission surface 14a. However, the second wavelength emission surface 14b may be slightly different in spatial intensity distribution of light from the first wavelength emission surface 14a. That is, the first wavelength emission surface 14a and the second wavelength emission surface 14b have similar spatial distributions of wavelength spectra.

In the present arrangement, there is no particular structure on the first wavelength emission surface 14a and the second wavelength emission surface 14b, and these wavelength emission surfaces are spatial regions where light is once formed into an image by the projector (projection portion) 12a.

In the present arrangement, for example, the wavelength-a is 450 nm, and the wavelength-b is 650 nm. The light of the wavelength spectrum-a is blue light, and the light of the wavelength spectrum-b is red light. The wavelength spectrum-a and the wavelength spectrum-b may be any spectra as long as they are different from each other. For example, in the wavelength spectrum-a, the light intensity in the visible light region may be regarded as substantially zero. That is, the visible light may be blocked immediately before reaching the first-a wavelength emission region 22a. In that case, if the light intensity of the wavelength spectrum-b is substantially greater than zero in the visible light region, the wavelength spectrum-a and the wavelength spectrum-b are different.

The operations of the above-described optical apparatus 10 according to the present arrangement will be described.

The optical apparatus 10 causes the first-a wavelength emission region 22a and the second-a wavelength emission region 24a to pass the light of the wavelength spectrum-a from the projector 12a of the light emission portion 12. At the same time, the optical apparatus 10 causes the first-b wavelength emission region 22b and the second-b wavelength emission region 24b to pass the light of the wavelength spectrum-b from the projector 12a of the light emission portion 12.

The light having passed through the first wavelength emission surface 14a illuminates the object surface S by the first lens element 16a of the lens array 16. The illuminated region is referred to as an irradiation field F1. Similarly, a part of the light having passed through the second wavelength emission surface 14b illuminates the same irradiation field F1 by the second lens element 16b of the lens array 16.

Of the light having passed through the first wavelength emission surface 14a, the light having passed through the first-a wavelength emission region 22a propagates in parallel along the first optical axis L1 by the first lens element 16a and reaches the irradiation field F1. On the other hand, the light having passed through the first-b wavelength emission region 22b propagates in the direction inclined to the first optical axis L1 by the first lens element 16a and reaches the irradiation field F1.

Further, of the light having passed through the second wavelength emission surface 14b, the light having passed through the second-a wavelength emission region 24a propagates in parallel along the second optical axis L2 by the second lens element 16b, reaches the object surface S, and illuminates the object surface S. The illuminated region is referred to as an irradiation field F2. A light beam that passes through the second-a wavelength emission region 24a and reaches the irradiation field F2 is defined as a second-a light beam B2a. On the other hand, the light having passed through the second-b wavelength emission region 24b propagates in the direction inclined to the second optical axis L2 by the second lens element 16b, and reaches the irradiation field F1 formed by the light having passed through the first-b wavelength emission region 22b.

Therefore, the irradiation field F1 is irradiated with at least the light of the wavelength-a that has passed through the first-a wavelength emission region 22a, the light of the wavelength-b that has passed through the first-b wavelength emission region 22b, and the light of the wavelength-b that has passed through the second-b wavelength emission region 24b in a superimposed manner. That is, a region where the light of the plurality of wavelength-a and wavelength-b is superimposed at the same time is formed. Therefore, the optical apparatus 10 according to the present arrangement irradiates the same irradiation field F1 of the object O with the light of the plurality of wavelength-a and wavelength-b. A light beam that has passed through the first-a wavelength emission region 22a and reached the irradiation field F1 is referred to as a first-a light beam B1a, and a light beam that has passed through the first-b wavelength emission region 22b and reached the same irradiation field F1 is referred to as a first-b light beam B1b. Further, a light beam that has passed through the second-b wavelength emission region 24b and reached the irradiation field F1 is defined as a second-b light beam B2b.

A case where the irradiation field F1 is observed from an oblique direction (line-of-sight direction) with respect to the first optical axis L1 will be discussed. It is assumed that the object surface S is a flat surface.

If the object surface S in the irradiation field F1 is a smooth surface, the first-a light beam B1a is specularly reflected, and reflected along the first optical axis L1. Therefore, the reflected light does not return to the observer, and the observer does not observe the light with the wavelength spectrum-a.

The first-b light beam B1b is also specularly reflected by the irradiation field F1, and reflected in an oblique direction with respect to the first optical axis L1. There is a possibility that the light reflected by the first-b light beam B1b returns to the observer who observes in the oblique direction (line-of-sight direction) with respect to the optical axis L1. The second-b light beam B2b is also specularly reflected by the irradiation field F1, and reflected in the oblique direction with respect to the first optical axis L1. There is a possibility that the light reflected by the second-b light beam B2b returns to the observer who observes in the oblique direction with respect to the optical axis L1. Accordingly, the first-b light beam B1b and the second-b light beam B2b may be observed by the observer, but the first-a light beam B1a is not observed. That is, the smooth surface can be observed by the first-b light beam B1b and the second-b light beam B2b.

On the other hand, when the object surface S in the irradiation field F1 has minute asperities or the like, the light is scattered by the minute asperities and reflected in various directions. Such a reflection characteristic can be described by a bidirectional reflectance distribution function (BRDF) representing the intensity of light for each reflection direction. For example, a case where the object surface S has minute asperities will be discussed. The first-a light beam B1a is scattered by minute asperities to form a group of various light beams, and some of the light beams are directed toward the observer. The scattered light beam group also has the same wavelength spectrum-a as the first-a light beam B1a. Therefore, each light beam of the scattered light beam group is also treated as the first-a light beam B1a. In this way, when the object surface S has minute asperities, the first-a light beam B1a is observed by the observer. At the same time, the first-b light beam B1b is also scattered by the minute asperities and directed toward the observer. Therefore, when the object surface S has minute asperities, the first-b light beam B1b is also observed by the observer. The second-b light beam B2b is also scattered by the minute asperities and directed toward the observer. Therefore, when the object surface S has minute asperities, the second-b light beam B2b is also observed by the observer. Accordingly, not only the first-a light beam B1a but also the first-b light beam B1b and the second-b light beam B2b are observed by the observer.

As described above, when the object surface S is the smooth surface, the first-a light beam B1a is not observed by the observer. Similarly, the second-a light beam B2a is not observed by the observer. That is, the smooth surface cannot be observed by the first-a light beam B1a and the second-a light beam B2a. However, the smooth surface can be observed by the first-b light beam B1b and the second-b light beam B2b. If the object surface S has minute asperities, not only the first-a light beam B1a but also the first-b light beam B1b and the second-b light beam B2b are observed. That is, the minute asperities can be observed not only by the first-a light beam B1a but also by the first-b light beam B1b and the second-b light beam B2b. As described above, if the object surface S is a smooth surface, the smooth surface cannot be observed by blue light but can be observed only by red light. On the other hand, if the object surface S has minute asperities, the minute asperities can be observed both by blue light and red light. Accordingly, when observing the blue light, the observer can specify that minute asperities exist, for example. Thus, the use of the optical apparatus 10 according to the present arrangement has an advantageous effect that the presence or absence of minute asperities on the object surface S can be more reliably detected by color (hue) information.

The optical apparatus 10 according to the present arrangement includes a light emission portion 12 that emits light, and an image-forming optical element array 16 having at least the first image-forming optical element 16a and the second image-forming optical element 16b. The optical apparatus 10 includes the first wavelength emission surface 14a that has the first wavelength emission region (the first-a wavelength emission region 22a) that, when light from the light emission portion 12 is emitted, emits light of the first wavelength spectrum-a toward the image-forming optical element array 16 by the light from the light emission portion 12, and the second wavelength emission region (the first-b wavelength emission region 22b) that, when light from the light emission portion 12 is emitted, emits light of the second wavelength spectrum-b different from the light of the first wavelength spectrum-a toward the image-forming optical element array 16 by the light from the light emission portion 12. The optical apparatus 10 also includes the second wavelength emission surface 14b that, when light from the light emission portion 12 is emitted, is arranged at a position different from the first wavelength emission surface 14a by the light from the light emission portion 12, and has the first wavelength emission region (the second-a wavelength emission region 24a) and the second wavelength emission region (the second-b wavelength emission region 24b) like the first wavelength emission surface 14a. The first wavelength emission surface 14a is positioned at or near the focal plane of the first image-forming optical element 16a, and the second wavelength emission surface 14b is positioned at or near the focal plane of the second image-forming optical element 16b.

The first image-forming optical element 16a of the image-forming optical element array 16 forms the first irradiation field F1 by the light of the first wavelength spectrum-a emitted from the first wavelength emission region (the first-a wavelength emission region 22a) of the first wavelength emission surface 14a and the light of the second wavelength spectrum-b emitted from the second wavelength emission region (the first-b wavelength emission region 22b) of the first wavelength emission surface 14a. The second image-forming optical element 16b of the image-forming optical element array 16 is arranged such that a region in which light is superimposed on the first irradiation field F1 is formed by one of the light of the first wavelength spectrum-a emitted from the first wavelength emission region (the second-a wavelength emission region 24a) of the second wavelength emission surface 14b and the light of the second wavelength spectrum-b emitted from the second wavelength emission region (the second-b wavelength emission region 24b) of the second wavelength emission surface 14b.

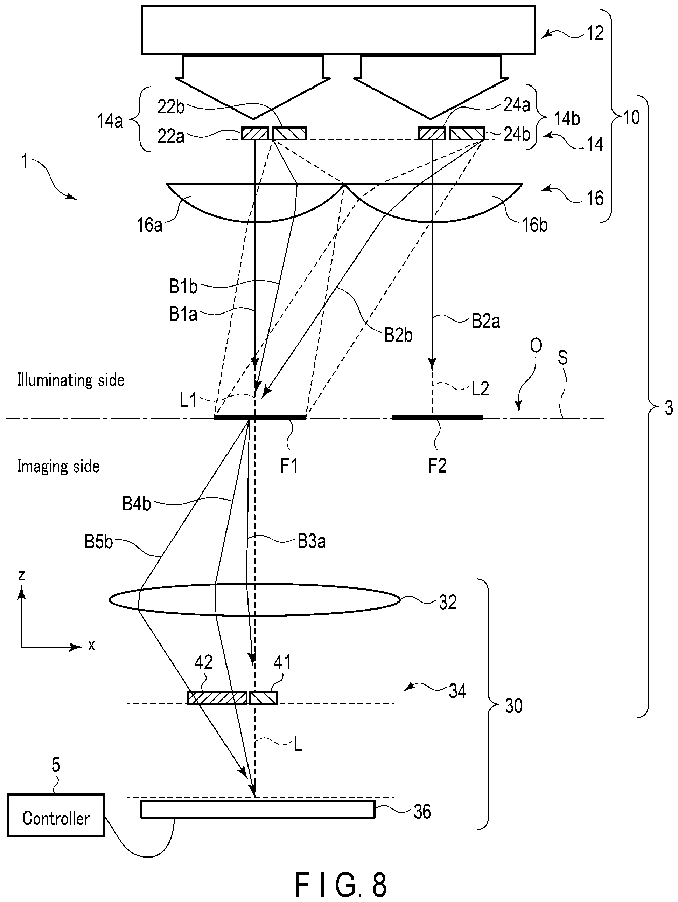

An example of observation by the observer has been described. Alternatively, a controller 5 described later may acquire information of the object such as whether the object surface S is a smooth surface or whether the object surface S has asperities by, for example, receiving light while distinguishing wavelengths using an image sensor 36 (see FIG. 8) described later and determining the light based on color information (hue) included in a signal received by the image sensor 36.

Therefore, according to the present arrangement, it is possible to provide the optical apparatus 10 that can acquire information of the object O by irradiating the same irradiation field F1 of the object with light of the plurality of wavelength-a and wavelength-b.

However, when light having passed through the first-b wavelength emission region 22b passes through the first lens element 16a to form the irradiation field F1, the illuminance distribution of the irradiation field F1 generally has unevenness. Even if the illuminance of the light passing through the first-b wavelength emission region 22b is uniform in the same region, the light beam group incident on the first lens element 16a is changed in different directions by the lens element 16a, so that the illuminance distribution of the irradiation field F1 formed by the light beam group becomes non-uniform. On the other hand, using the lens array 16 including the plurality of lens elements 16a and 16b as in the present arrangement makes uniform the illuminance distribution of the irradiation field F1.

The lens array 16 may also be called a fly-eye lens array or a micro-lens array. In the present arrangement, the illuminance distribution is made uniform by superimposing the irradiation fields F1 formed by the lens elements 16a and 16b. That is, even if the irradiation fields F1 formed by the lens elements 16a and 16b are non-uniform, superimposing them forms the uniform irradiation field F1. Alternatively, the characteristics of the individual lens elements 16a and 16b may be actively made different, and the illuminance distribution formed by each lens element may be adjusted. Such adjustment cannot be performed in a case where there is one lens element.

The use of the optical apparatus 10 according to the present arrangement makes it possible to superimpose the irradiation field F1 formed by the light of the wavelength spectrum-b having passed through the second-b wavelength emission region 22b on the irradiation field F1 formed by the light of the wavelength spectrum-b having passed through the first-b wavelength emission region 24b. That is, with the use of the lens array 16, the optical apparatus 10 according to the present arrangement has an effect of making the illuminance distribution uniform with light from a plurality of directions having the same wavelength spectrum-b.

Since the illuminance distribution in the irradiation field F1 can be made uniform, when the object surface S is a smooth surface, for example, the intensity of the reflected light from each object point on the object surface S can be suppressed from greatly fluctuating. When the smooth surface has minute asperities, the intensity and color of light from the minute asperities greatly change at the same time. This makes it possible to increase the difference in intensity of the reflected light between the case where the object surface S is a smooth surface and the case where the object surface S has minute asperities. On the other hand, if the illuminance distribution is non-uniform and the intensity of the reflected light greatly fluctuates on the smooth surface, it is difficult to distinguish from the intensity change of the reflected light due to the presence of minute asperities. That is, compared with the case where the illuminance distribution in the irradiation field F1 is non-uniform, making uniform the illuminance distribution in the irradiation field F1 by using the optical apparatus 10 according to the present arrangement makes it possible to identify the intensity of the reflected light due to the minute asperities, which has an effect that the presence or absence of the minute asperities can be easily identified. If the minute asperities are present, not only the light intensity but also the color (hue) can be greatly changed at the same time, as compared with the case of the smooth surface.

As described above, the use of the optical apparatus 10 according to the present arrangement has an effect that the surface information of the object (object surface) S in the irradiation field F1 can be more accurately acquired from the light intensity or the color (hue) information. Furthermore, the use of the optical apparatus 10 according to the present arrangement makes it possible to form the irradiation field F1 with a more uniform illuminance distribution.

An optical inspection method according to the present arrangement includes emitting light of the first wavelength spectrum-a from the first-a wavelength emission region 22a toward the first image-forming optical element 16a of the image-forming optical element array 16, emitting light of the second wavelength spectrum-b different from the first wavelength spectrum-a from the first-b wavelength emission region 22b toward the first image-forming optical element 16a of the image-forming optical element array 16, emitting the light of the first wavelength spectrum-a from the second-a wavelength emission region 24a different from the first-a wavelength emission region 22a and the first-b wavelength emission region 22b toward the second image-forming optical element 16b different from the first image-forming optical element 16a of the image-forming optical element array 16, emitting the light of the second wavelength spectrum-b from the second-b wavelength emission region 24b different from the first-a wavelength emission region 22a, the first-b wavelength emission region 22b, and the second-a wavelength emission region 24a toward the second image-forming optical element 16b of the image-forming optical element array 16, and illuminating the object surface S of the object O with the light of the first wavelength spectrum-a and the light of the second wavelength spectrum-b that have passed through the first image-forming optical element 16a, and the light of the first wavelength spectrum-a and the light of the second wavelength spectrum-b that have passed through the second image-forming optical element 16b. Illuminating the object surface S of the object O includes irradiating the same first irradiation field F1 with the light of the first wavelength spectrum-a and the light of the second wavelength spectrum-b that have passed through the first image-forming optical element 16a. The observer can acquire information of the object surface S of the object O by using the illumination light of the object surface S of the object O to grasp the colors (the wavelength spectrum-a and the wavelength spectrum-b) from the first irradiation field F1 where the object surface S of the object O was illuminated, for example.

Further, the illuminating the object surface S of the object O includes forming a region where light is superimposed on the first irradiation field F1 by one of the light of the first wavelength spectrum-a emitted from the second-a wavelength emission region 24a and the light of the second wavelength spectrum-b emitted from the second-b wavelength emission region 24b. According to the optical inspection method according to the present arrangement, using the lens array 16 (the image-forming optical elements 16a and 16b) has an effect that the first irradiation field F1 can be irradiated with light from a plurality of directions having the same wavelength spectrum-b to make the illuminance distribution uniform.

Therefore, according to the present arrangement, it is possible to provide the optical apparatus 10 and the optical inspection method that can acquire information of the object O by irradiating the same irradiation field F1 of the object O with light of the plurality of wavelength-a and wavelength-b.

In the example described above, the projector 12a is used as the light emission portion 12. As the light emission portion 12, one in the following modification can be used, for example.

(First Modification)

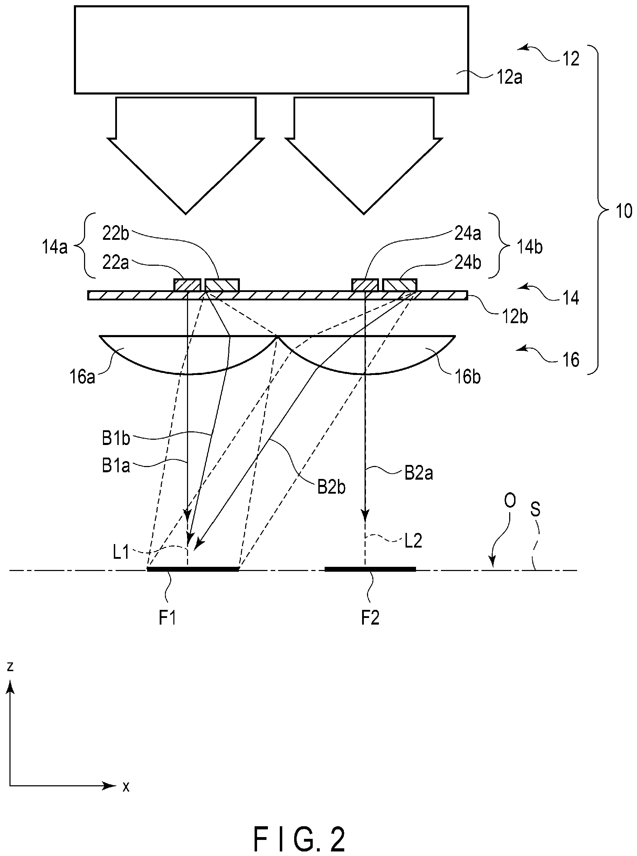

As illustrated in FIG. 2, a light emission portion 12 may use a combination of a projector 12a and a light diffusion portion (a light diffusion plate or a light diffusion sheet) 12b. That is, the light diffusion portion 12b may be arranged on the focal plane of each of lens elements 16a and 16b of a lens array 16, and the projector 12a may project an image toward the light diffusion portion 12b. In this way, the light spreads in various directions in the light diffusion portion 12b. Accordingly, the light reaches the entire areas of the lens elements 16a and 16b, which has an effect of expanding an irradiation field F1.

However, the light emission portion 12 is not limited to the projector 12a, and may be any unit as long as it passes the light of a wavelength spectrum-a through a first-a wavelength emission region 22a and a second-a wavelength emission region 24a, and passes the light of a wavelength spectrum-b through a first-b wavelength emission region 22b and a second-b wavelength emission region 24b.

(Second Modification)

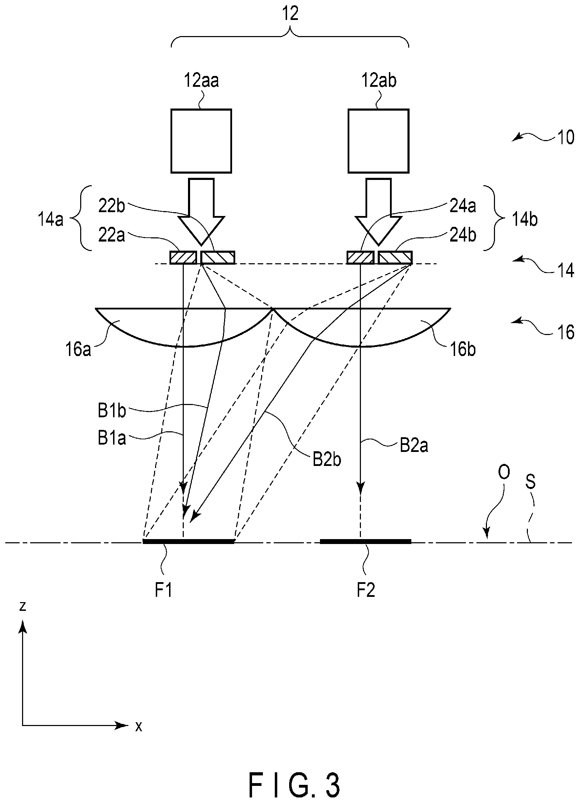

As illustrated in FIG. 3, a light emission portion 12 may use light sources 12aa and 12ab that emit light (for example, white light) including a wavelength spectrum-a and a wavelength spectrum-b, for example. For this reason, white light emitting diodes (LEDs) can be used as the light sources 12aa and 12ab. The light emission portion 12 according to the present modification includes a wavelength emission surface 14 (a first wavelength emission surface 14a and a second wavelength emission surface 14b). The first wavelength emission surface 14a and the second wavelength emission surface 14b can be recognized in substance without projecting light from the light emission portion 12.

Further, the first wavelength emission surface 14a has a first filter 22a and a second filter 22b arranged in the first-a wavelength emission region and the first-b wavelength emission region. The first filter 22a passes light of a wavelength spectrum having the wavelength-a as a main component (dominant wavelength). This wavelength spectrum is referred to as wavelength spectrum-a. The first filter 22a shields light of the wavelength-b. The second filter 22b passes light of a wavelength spectrum having the wavelength-b as a dominant wavelength. This wavelength spectrum is referred to as wavelength spectrum-b. The second filter 22b shields light of the wavelength-a. However, the first filter 22a and the second filter 22b are not limited to the above ones, and any filters may be used as long as they pass light of wavelength spectra different in the first-a wavelength emission region 22a and the first-b wavelength emission region 22b. That is, the first wavelength emission surface 14a and the second wavelength emission surface 14b have color filters that pass light of different wavelength spectra.

The second wavelength emission surface 14b has a first filter 24a and a second filter 24b arranged in the second-a wavelength emission region and the second-b wavelength emission region. The second-a wavelength emission region 24a passes light of the wavelength spectrum-a having a wavelength-a as a main component (dominant wavelength) and shields light of a wavelength-b. The second-b wavelength emission region 24b passes light of the wavelength spectrum-b having the wavelength-b as a dominant wavelength and shields light of the wavelength-a. However, the second wavelength emission surface 14b is not limited to this, and may be any surface as long as it passes light of wavelength spectra different in the second-a wavelength emission region 24a and the second-b wavelength emission region 24b.

The light source 12aa may be arranged at or near the first wavelength emission surface 14a such that light beams including the wavelength spectrum-a and the wavelength spectrum-b from the light source 12aa are applied to the color filters arranged in the wavelength emission regions 22a and 22b of the first wavelength emission surface 14a, and the light source 12ab may be arranged at or near the second wavelength emission surface 14b such that light beams including the wavelength spectrum-a and the wavelength spectrum-b from the light source 12ab are applied to the color filters arranged in the wavelength emission regions 24a and 24b of the second wavelength emission surface 14b.

In the present modification, an example has been described in which the light emission portion 12 uses the light sources 12aa and 12ab that emit light (for example, white light) including the wavelength spectrum-a and the wavelength spectrum-b. Instead of the light sources 12aa and 12ab, the projector 12a in the first arrangement can also be used.

The optical apparatus 10 according to the present arrangement includes a light emission portion 12 that emits light, and an image-forming optical element array 16 having at least two first image-forming optical element 16a and second image-forming optical element 16b. The optical apparatus 10 includes a first wavelength emission surface 14a having a first wavelength emission region (a first-a wavelength emission region 22a) that emits light of a first wavelength spectrum-a toward the image-forming optical element array 16 by light from the light emission portion 12 when light is emitted from the light emission portion 12 and a second wavelength emission region (a first-b wavelength emission region 22b) that emits light of a second wavelength spectrum-b different from the light of the first wavelength spectrum-a toward the image-forming optical element array 16 by the light from the light emission portion 12. The optical apparatus 10 also includes the second wavelength emission surface 14b that is arranged at a position different from the first wavelength emission surface 14a, and has the first wavelength emission region (the second-a wavelength emission region 24a) and the second wavelength emission region (the second-b wavelength emission region 24b) like the first wavelength emission surface 14a. The first wavelength emission surface 14a is positioned at or near the focal plane of the first image-forming optical element 16a, and the second wavelength emission surface 14b is positioned at or near the focal plane of the second image-forming optical element 16b.

The first wavelength emission region (the first-a wavelength emission region 22a and the second-a wavelength emission region 24a) has the first filters 22a and 24a that pass light of the first wavelength spectrum-a, respectively. The second wavelength emission region (the second-b wavelength emission region 24a and the second-b wavelength emission region 24a) has the second filters 22b and 24b that pass light of the second wavelength spectrum-b, respectively.

(Third Modification)

The light emission portion 12 according to the present modification includes a wavelength emission surface 14 (a first wavelength emission surface 14a and a second wavelength emission surface 14b). The first wavelength emission surface 14a and the second wavelength emission surface 14b can be recognized in substance without projecting light from the light emission portion 12.

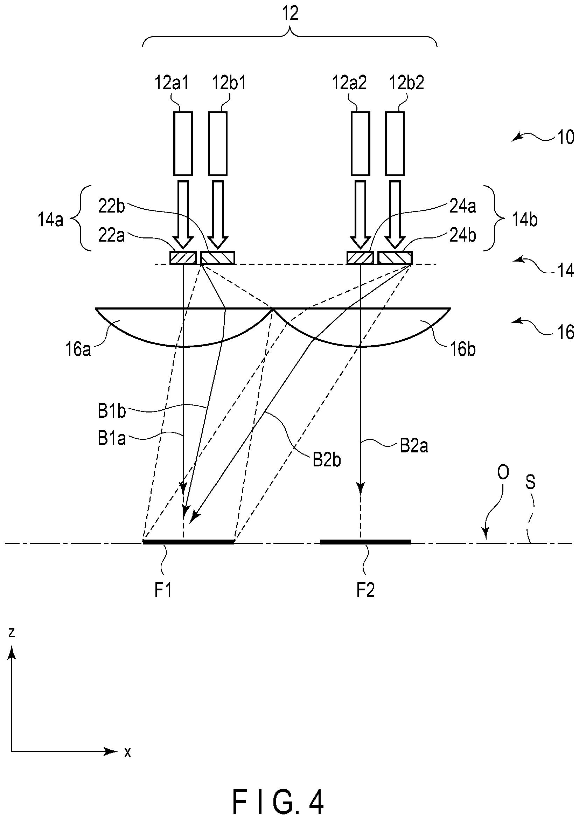

As illustrated in FIG. 4, instead of arranging color filters in a wavelength emission region 22a of the first wavelength emission surface 14a and a wavelength emission region 24a of the second wavelength emission surface 14b, for example, phosphors (first phosphors) that emit light of a wavelength spectrum-a by irradiation with excitation light may be arranged in or near the wavelength emission region 22a and in or near the wavelength emission region 24a. In this case, the light sources of the light emission portion 12 as light sources of the excitation light may irradiate the phosphors 22a and 24a (first phosphors) with light from LEDs or laser-diodes (LDs) having a wavelength spectrum that excites the phosphors 22a and 24a. For example, an LED or LD indicated by reference sign 12a1 is used as a light source that causes the phosphor 22a to emit light of the wavelength spectrum-a, and for example, an LED or LD indicated by reference sign 12a2 is used as a light source that causes the phosphor 24a to emit light of the wavelength spectrum-a. The wavelength of light emitted from the light sources 12a1 and 12a2 that excite the phosphors 22a and 24a emitting light of the wavelength spectrum-a is shorter than the wavelength spectrum-a. However, the wavelength of light is not limited to this in the present modification, and a long wavelength may be used.

Similarly, instead of arranging color filters in a wavelength emission region 22b of the first wavelength emission surface 14a and a wavelength emission region 24b of the second wavelength emission surface 14b, for example, phosphors (second phosphors) that emit light of a wavelength spectrum-b by irradiation with excitation light may be arranged in or near the wavelength emission region 22b and in or near the wavelength emission region 24b. In this case, the light sources of the light emission portion 12 as light sources of the excitation light may irradiate the phosphors 22b and 24b (second phosphors) with light from LEDs or LDs having a wavelength spectrum that excites the phosphors 22b and 24b. For example, an LED or LD indicated by reference numeral 12b1 is used as a light source that causes the phosphor 22b to emit light of the wavelength spectrum-b, and for example, an LED or LD indicated by reference numeral 12b2 is used as a light source that causes the phosphor 24b to emit light of the wavelength spectrum-b. The wavelength of light emitted from the light sources 12b1 and 12b2 that excite the phosphors 22b and 24b emitting light of the wavelength spectrum-b is shorter than the wavelength spectrum-b. However, the wavelength of light is not limited to this in the present modification, and a long wavelength may be used.

Therefore, the first wavelength emission surface 14a and the second wavelength emission surface 14b have their respective phosphors.

That is, the illumination device according to the present modification that enters light into an image-forming optical element array 16 in order to illuminate an appropriate irradiation field F1 may be any illumination device that emits light of the wavelength spectrum-a from the first-a wavelength emission region 22a and the second-a wavelength emission region 24a, and emits light of the wavelength spectrum-b from the first-b wavelength emission region 22b and the second-b wavelength emission region 24b.

(Fourth Modification)

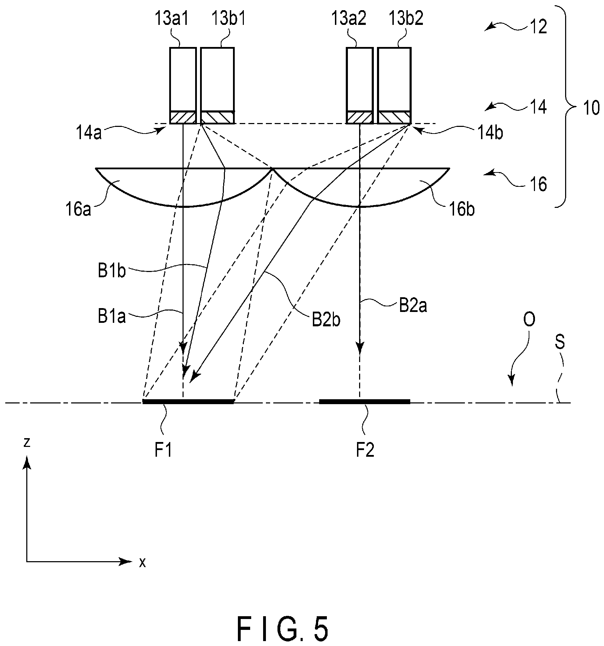

As illustrated in FIG. 5, a light emission portion 12 includes light sources (here, two pairs of light sources) 13a1, 13b1, 13a2, and 13b2 and a wavelength emission surface 14 (a first wavelength emission surface 14a and a second wavelength emission surface 14b). An optical apparatus 10 according to the present modification includes the plurality of pairs of light sources 13a1, 13b1, 13a2, and 13b2 in which a wavelength emission surface 14 is integrated with the light emission portion 12.

For example, each of the light sources 13a1 and 13a2 emits light of a wavelength spectrum-a. Each of the light sources 13b1 and 13b2 emits light of a wavelength spectrum-b. As the light sources 13a1 and 13a2, micro LEDs, micro LED arrays, LEDs, LED arrays, LDs, or the like that emit light of the wavelength spectrum-a can be used, for example. As the light sources 13b1 and 13b2, micro LEDs, micro LED arrays, LEDs, LED arrays, LDs, or the like that emit light of the wavelength spectrum-a can be used, for example.

The light emission position of the light source 13a1 is preferably a position in a first-a wavelength emission region 22a described in FIGS. 1 to 4, that is, on or near the first wavelength emission surface 14a, and the light emission position of the light source 13b1 is preferably a position in a first-b wavelength emission region 22b described in FIGS. 1 to 4, that is, on or near the first wavelength emission surface 14a. In addition, the light emission position of the light source 13a2 is preferably a position in a second-a wavelength emission region 24a described in FIGS. 1 to 4, that is, on or near the second wavelength emission surface 14b, and the light emission position of the light source 13b2 is preferably a position in a second-b wavelength emission region 24b described in FIGS. 1 to 4, that is, on or near the second wavelength emission surface 14b.

That is, the light emission portion 12 includes the first light sources 13a1 and 13a2 that emit light of the first wavelength spectrum-a and the second light sources 13b1 and 13b2 that emit light of the second wavelength spectrum-b. Then, the first light sources 13a1 and 13a2 are respectively arranged in the wavelength emission regions 22a and 24a of the first wavelength emission surface 14a and the second wavelength emission surface 14b. In addition, the second light sources 13b1 and 13b2 are respectively arranged in the wavelength emission regions 22b and 24b of the first wavelength emission surface 14a and the second wavelength emission surface 14b.

That is, the illumination device according to the present arrangement that enters light into an image-forming optical element array 16 in order to illuminate an appropriate irradiation field F1 may be any illumination device that emits light of the first wavelength spectrum-a from the first-a wavelength emission region 22a and the second-a wavelength emission region 24a, and emits light of the second wavelength spectrum-b from the first-b wavelength emission region 22b and the second-b wavelength emission region 24b.

(Fifth Modification)

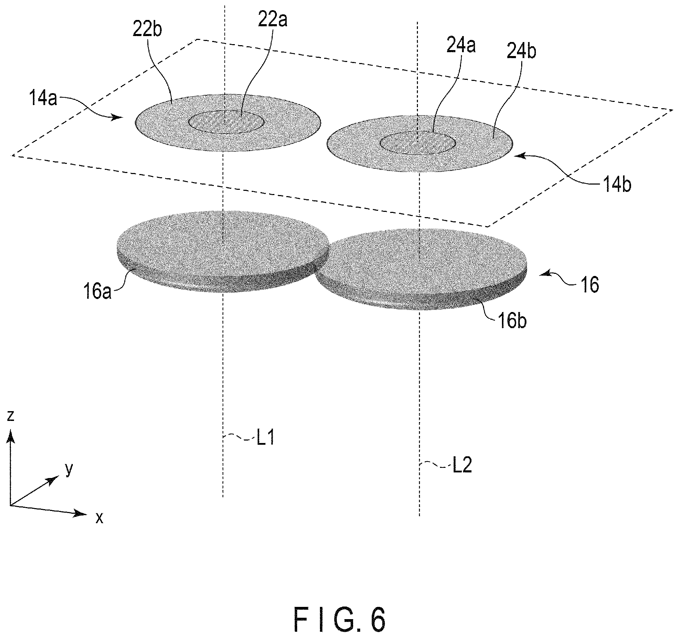

Hereinafter, a modification of a wavelength emission surface 14 and an image-forming optical element array 16 of an optical apparatus 10 will be described with reference to FIG. 6.

FIG. 6 is a perspective view of the wavelength emission surface 14 and the image-forming optical element array 16 of the optical apparatus 10 according to a fifth modification of the present arrangement. FIG. 6 does not illustrate a light emission portion 12 and irradiation fields F1 and F2.

The lens array 16 illustrated in FIG. 6 includes axisymmetric lens elements 16a and 16b. That is, the first lens element 16a is axisymmetric about a first optical axis L1, and the second lens element 16b is axisymmetric about a second optical axis L2. The optical axes L1 and L2 are parallel to a z axis, and an xy plane is orthogonal to the z axis. The first lens element 16a and the second lens element 16b are the same. A focal plane of the first lens element 16a and a focal plane of the second lens element 16b are on the same plane. The focal planes are parallel to the xy plane. The first wavelength emission surface 14a and the second wavelength emission surface 14b may be formed by a projector (projection portion) 12a (see FIG. 1) projecting images concentric with the first optical axis L1 and the second optical axis L2, respectively. Alternatively, wavelength emission regions 22a, 22b, 24a, and 24b as color filters (see FIG. 3), phosphors (see FIG. 4), or the like may be arranged. Therefore, the center of the first-a wavelength emission region 22a intersects the first optical axis L1, and the center of the second-a wavelength emission region 24a intersects the second optical axis L2.

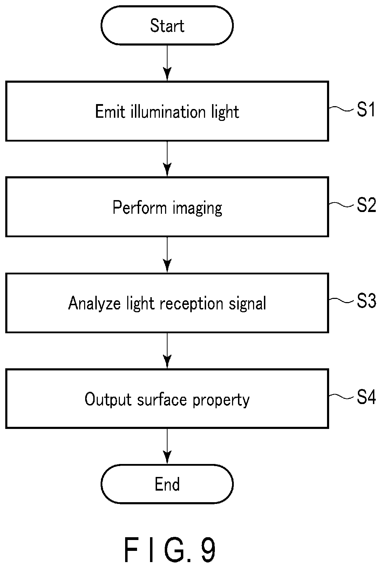

A case where an image of the irradiation field F1 illuminated by the optical apparatus 10 according to the present modification is acquired by an image sensor 36 (see FIGS. 8, 10, and 11) instead of the observer will be discussed. The image acquired by the image sensor 36 is processed using a controller 5 (see FIGS. 8 and 9) including a processor, so that the spread of a BRDF in an x-axis direction and a y-axis direction can be simultaneously acquired (observed) as color information in the irradiation field F1 (see FIGS. 1 to 4). Accordingly, when an object (object surface S) is illuminated using the optical apparatus 10 according to the present modification and the illuminated irradiation field F1 is acquired as an image, the surface state can be identified from the spread of the BRDF in various directions. Further, the use of the optical apparatus 10 according to the present modification enables superimposition of the irradiation field F1 formed by the first lens element 16a and the irradiation field F1 formed by the second lens element 16b as described in the first arrangement, which has an effect of reducing the illuminance unevenness in the irradiation field F1.

Therefore, according to the present modification, it is possible to provide the optical apparatus 10 and the optical inspection method that can acquire information of the object O by irradiating the same irradiation field F1 of the object O with light of the plurality of wavelength-a and wavelength-b.

(Sixth Modification)

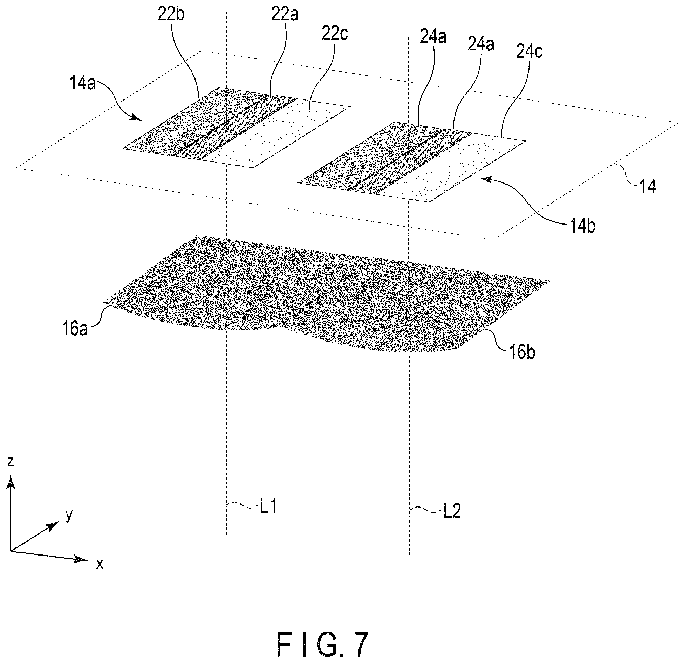

Hereinafter, an optical apparatus 10 as a further modification of the fifth modification will be described with reference to FIG. 7.

FIG. 7 is a perspective view of a wavelength emission surface 14 and an image-forming optical element array 16 of the optical apparatus 10 according to the present modification. FIG. 7 does not illustrate a light emission portion 12 and irradiation fields F1 and F2.

Referring to FIG. 7, the lens array 16 includes lens elements 16a and 16b having translational symmetry. That is, the first lens element 16a and the second lens element 16b have translational symmetry in a y-axis direction, for example. Such lenses are called lenticular lenses. Optical axes L1 and L2 of the lens elements 16a and 16b are parallel to a z axis, and an xy plane is orthogonal to the z axis. The first lens element 16a and the second lens element 16b are the same. A focal plane of the first lens element 16a and a focal plane of the second lens element 16b are on the same plane. The focal planes are parallel to the xy plane. The first wavelength emission surface 14a and the second wavelength emission surface 14b have wavelength emission regions 22a, 22b, and 22c and wavelength emission regions 24a, 24b, and 24c, respectively, by projection images that are formed by light from a projector (projection portion) and have translational symmetry in the y axis, for example. Alternatively, these may include color filters, phosphors, or the like, and form the wavelength emission regions 22a, 22b, 22c, 24a, 24b, and 24c. That is, the first wavelength emission surface 14a has three different wavelength emission regions 22a, 22b, and 22c, which are the wavelength emission region 22a, the wavelength emission region 22b, and the wavelength emission region 22c. The second wavelength emission surface 14b similarly has the wavelength emission region 24a, the wavelength emission region 24b, and the wavelength emission region 24c. The wavelength emission regions 22a and 24a pass light of a wavelength spectrum-a having a wavelength-a as the dominant wavelength, and the wavelength emission regions 22b and 24b pass light of a wavelength spectrum-b having a wavelength-b as the dominant wavelength. The wavelength emission regions 22c and 24c pass light of a wavelength spectrum-c having a wavelength-c as the dominant wavelength. The wavelength-c is 550 nm and represents green light.

Referring to FIG. 7, the first-a wavelength emission region 22a intersects the first optical axis L1, and the center of the second-a wavelength emission region 24a intersects the second optical axis L2.

An image that can be acquired by using the optical apparatus 10 according to the present modification as the illumination portion to illuminate the object O is processed using a controller (see FIGS. 8 and 9) including a processor, so that the spread of a BRDF in an x-axis direction can be acquired (observed) as color (hue) information in the irradiation field F1 (see FIGS. 1 to 4). Therefore, the controller 5 acquires information regarding the BRDF of the object O based on the hue of the light from the object O. On the other hand, the spread in the y-axis direction can be acquired (observed) as change in light intensity. Accordingly, various surface states can be identified as changes in color (hue) and changes in light intensity. Further, the use of the optical apparatus 10 according to the present modification enables superimposition of the irradiation field F1 formed by the first lens element 16a and the irradiation field F1 formed by the second lens element 16b as described in the first arrangement, which has an effect of reducing the illuminance unevenness in the irradiation field F1.

Therefore, the optical inspection method according to the present modification includes acquiring the hue of the light from the object surface S of the object O by the above-described illumination of the object surface S of the object O, and acquiring the information regarding the BRDF of the object O based on the acquired hue of the light.

Therefore, according to the present modification, it is possible to provide the optical apparatus 10 and the optical inspection method that can acquire information of the object O by irradiating the same irradiation field F1 of the object O with light of the plurality of wavelength-a and wavelength-b.

(Second Arrangement)

Hereinafter, an optical inspection system 1 according to the present arrangement will be described in detail with reference to FIGS. 8 and 9. The present arrangement is a further modification of the first arrangement including each modification. The same members or members having the same functions as the members described above in the first arrangement are denoted by the same reference numerals as much as possible, and detailed description thereof will be omitted.

FIG. 8 is a schematic cross-sectional view of the optical inspection system 1 according to the present arrangement. The cross-sectional view in FIG. 8 resides on the xz plane, for example.

The optical inspection system 1 according to the present arrangement includes an optical inspection apparatus 3 and a controller 5.

The optical inspection apparatus 3 includes an illumination portion (optical apparatus) 10 and an imaging portion 30. The illumination portion 10 includes a light emission portion 12 and an image-forming optical element array 16. The light emission portion 12 and the image-forming optical element array 16 can be those described above in the first arrangement.

The imaging portion 30 includes an image-forming optical element 32 for imaging, an imaging opening 34, and an image sensor 36. The image-forming optical element for imaging 32 is an image-forming optical element 32 provided in the imaging portion 30. The focal plane of the image-forming optical element for imaging 32 is set as an imaging focal plane. The imaging opening 34 is arranged on or near the imaging focal plane of the image-forming optical element for imaging 32 between the image-forming optical element for imaging 32 and the image sensor 36.

In FIG. 8, the illumination side is schematically drawn on the upper side of an object surface S, and the imaging side is schematically drawn on the lower side of the object surface S. In particular, if the object O transmits light, the actual positional relationship between the illumination side and the imaging side is the same as that in the drawing. On the other hand, if the object O reflects light on the surface thereof, the actual positional relationship between the illumination side and the imaging side is obtained by folding FIG. 8 in mirror symmetry with respect to the object surface S. In this case, however, the illumination portion 10 and the imaging portion 30 may structurally interfere with each other. Such a case can be easily avoided by arranging a non-polarization beam splitter (not illustrated), a polarization beam splitter (not illustrated), or the like in the optical path of the light reflected from the object surface S. As described above, partially overlapping the optical paths from the illumination portion 10 to the imaging portion 30 via the beam splitter provides an advantage that the entire optical inspection apparatus 3 can be made compact while avoiding structural interference between the illumination portion 10 and the imaging portion 30. In particular, matching an optical axis L1 of the illumination portion 10 with an imaging optical axis L of the imaging portion 30 is referred to as coaxial epi-illumination.

In addition, the use of a polarization beam splitter for folding back the optical path provides an advantage in that light scattered by minute asperities or the like on the object surface S can be extracted, and surface information of the object O can be acquired. This is because, when light is scattered by minute asperities or the like, polarization of reflected light is generally rotated with respect to incident light.

In the present arrangement, the object O reflects light, and the optical path on the imaging side in FIG. 8 is actually folded back in mirror symmetry on the object surface S. At this time, the object surface S of the object O is illuminated by the light from the light emission portion 12 of the illumination portion 10. The illuminated regions on the object surface S are referred to as, irradiation fields F1 and F2. However, the object O is not limited to this in the present arrangement, and the object O may be transparent or semi-translucent to light.

Image-forming optical elements 16a and 16b of the image-forming optical element array 16 have a function of collecting a light beam group emitted from a certain point to a conjugate image point. In the present arrangement, the image-forming optical element array 16 is a lens array, and the two image-forming optical elements 16a and 16b constituting the lens array 16 are Fresnel lenses, for example.

The optical axes L1 and L2 of the lens elements 16a and 16b are included in the cross section of FIG. 8, and they are parallel to a z axis. The optical axis L1 of the first lens element 16a and the optical axis L2 of the second lens element 16b are defined as first optical axis L1 and second optical axis L2, respectively.

A first wavelength emission surface 14a and a second wavelength emission surface 14b are formed on or near the focal planes of the first lens element 16a and the second lens element 16b, respectively. In the present arrangement, the focal planes of the first lens element 16a and second lens element 16b are on the same plane.

The first wavelength emission surface 14a forms a first-a wavelength emission region 22a and a first-b wavelength emission region 22b. The first-a wavelength emission region 22a passes the light of the wavelength spectrum having a wavelength-a as a main component (dominant wavelength). This wavelength spectrum is referred to as wavelength spectrum-a. The first-b wavelength emission region 22b passes the light of the wavelength spectrum having a wavelength-b as a dominant component. This wavelength spectrum is referred to as wavelength spectrum-b. In the present arrangement, for example, the wavelength-a is 450 nm, and the wavelength-b is 650 nm. The light of the wavelength spectrum-a is blue light, and the light of the wavelength spectrum-b is red light. However, the wavelength spectrum-a and the wavelength spectrum-b in the present arrangement is not limited to this, and the wavelength spectrum-a and the wavelength spectrum-b may be any spectra as long as they are different from each other. For example, in the wavelength spectrum-a, the light intensity in the visible light region may be regarded as substantially zero. At this time, the wavelength spectrum-b includes a wavelength spectrum having a light intensity substantially greater than zero in the visible light region. Then, the wavelength spectrum-a and the wavelength spectrum-b are different.

The image-forming optical element for imaging 32 is a set lens including a plurality of lenses. However, the image-forming optical element 32 in the present arrangement is not limited to this, and the image-forming optical element 32 may be a concave mirror, a convex mirror, or a combination thereof. That is, the image-forming optical element 32 may be any optical element as long as it has a function of collecting a light beam group emitted from a certain point to a conjugate image point.

The imaging opening 34 of the imaging portion 30 is a color filter having a region through which a specific wavelength spectrum passes, for example. The imaging opening 34 includes a first wavelength selection region 41 and a second wavelength selection region 42. The first wavelength selection region 41 passes light of the wavelength spectrum-b. On the other hand, the first wavelength selection region 41 shields the light of the wavelength-a. The second wavelength selection region 42 passes light of the wavelength spectrum-a. On the other hand, the second wavelength selection region 42 shields the light of the wavelength-b. However, the imaging opening 34 in the present arrangement is not limited to this configuration, and the imaging opening 34 may be a through hole or an annular opening. That is, the imaging opening 34 of the imaging portion 30 may have any region through which light of a specific wavelength spectrum passes.

As illustrated in FIG. 3, the light emission portion 12 of the present arrangement has two types of color filters 22a, 22b, 24a, and 24b that transmit light of the wavelength spectrum-a and light of the wavelength spectrum-b, respectively, at or near the wavelength emission surfaces 14a and 14b, for example, and irradiates the color filters 22a, 22b, 24a, and 24b with light from white light emitting diodes (LEDs) as light sources 12aa and 12ab, for example, to selectively transmit light of the wavelength spectrum-a and the wavelength spectrum-b. However, the light sources of the light emission portion 12 are not limited to these, and those described above with reference to FIGS. 1 to 4 can be used as appropriate. As the wavelength emission surfaces 14a and 14b of the wavelength emission surface 14, those described above with reference to FIGS. 1 to 7 can be used as appropriate.

The image sensor 36 of the imaging portion 30 has at least one or more pixels, and each pixel can receive light of at least two different wavelengths, that is, light of the wavelength-a and light of the wavelength-b, as independent signals. A surface including the image sensor 36 is defined as an image-forming surface (or an image surface) of the image-forming optical element for imaging 32. The image sensor 36 may be an area sensor or a line sensor. The area sensor is a sensor in which pixels are arrayed in a planar shape in the same plane. The line sensor is a sensor in which pixels are arrayed in a line shape. Each pixel of the image sensor 36 may include three color channels of R, G, and B. That is, each pixel of the image sensor 36 may receive light in independent color channels. However, the color channels need not be completely independent, and may be substantially slightly sensitive to the same wavelength-between them. In the present arrangement, the image sensor 36 is an area sensor that can distinguish at least two different wavelengths included in the wavelength spectrum-a and the wavelength spectrum-b.

The controller 5 is a computer that is configured to control the light emission portion 12 and the image sensor 36 of the imaging portion 30, for example. The controller 5 includes a processor, a ROM (storage unit), a RAM, an auxiliary storage device (storage unit), a communication interface (communication unit), and the like.

The processor is equivalent to a central part of a computer that performs processing such as calculation and control necessary for processing by the controller 5, and comprehensively controls the entire controller 5. The processor performs control to implement various functions of the controller 5, based on programs such as system software, application software, or firmware stored in a storage unit such as a ROM or an auxiliary storage device. The processor includes a central processing unit (CPU), a micro processing unit (MPU), a digital signal processor (DSP), an application specific integrated circuit (ASIC), a field programmable gate array (FPGA), or the like, for example. Alternatively, the processor is a combination of two or more of these. One or more processors may be provided in the controller 5.

The ROM is equivalent to a main storage device of a computer mainly including a processor. The ROM is a nonvolatile memory exclusively used for reading data. The ROM stores an optical inspection program based on the flow shown in FIG. 9, for example. The ROM also stores data, various setting values, or the like used by the processor to perform various processes.

The RAM is equivalent to a main storage device of a computer mainly including a processor. The RAM is a memory used for reading and writing data. The RAM is used as a work area or the like in which data temporarily used by the processor to perform various processes is stored.

The auxiliary storage device is equivalent to an auxiliary storage unit of a computer mainly including a processor. The auxiliary storage device is an electrically erasable programmable read-only memory (EEPROM) (registered trademark), a hard disk drive (HDD), or a solid-state drive (SSD), for example. The auxiliary storage device may store an optical inspection program based on the flow shown in FIG. 9. The auxiliary storage device can also store data used by the processor to perform various types of processing, data generated by processing in the processor, various setting values, and the like.

The programs stored in the ROM or the auxiliary storage device includes a program for controlling the controller 5. For example, the optical inspection program based on the flow shown in FIG. 9 is preferably stored in the ROM or the auxiliary storage device as a non-transitory storage medium.

The communication interface is an interface for communicating with another device via a network or the like in a wired or wireless manner, receiving various types of information transmitted from the other device, and transmitting various types of information to the other device. The optical inspection program of the optical inspection system 1 may be executed on a server or a cloud of various systems separated from the optical inspection apparatus 3 via the communication interface of the controller 5. Therefore, it is also preferable that the optical inspection program is not stored in the ROM or the auxiliary storage device, but is provided on a server or a cloud, and the optical inspection program is executed while communicating with the controller 5 included in the optical inspection system 1 via the communication interface, for example.

The operation of the optical inspection system 1 according to the present arrangement described above will be described with reference to FIG. 9.

The optical inspection system 1 causes the color filters 22a, 22b, 24a, and 24b to pass light from the white LED light source provided in the light emission portion 12, so that the light of the wavelength spectrum-a passes from the first-a wavelength emission region 22a and the second-a wavelength emission region 24a. At the same time, the light of the wavelength spectrum-b pass from the first-b wavelength emission region 22b and the second-b wavelength emission region 24b.

The light having passed through the first wavelength emission surface 14a illuminates the object surface S by the first lens element 16a of the lens array 16, and the illuminated region is set as the irradiation field F1. Similarly, the light having passed through the second wavelength emission surface 14b illuminates the object surface S by the second lens element 16b of the lens array 16. At this time, a part of the light having passed through the second wavelength emission surface 14b illuminates the irradiation field F1. However, the irradiation field F1 formed by the first lens element 16a and the irradiation field F1 formed by the second lens element 16b do not completely overlap each other, and have regions that do not overlap each other. Thus, the optical inspection system 1 according to the present arrangement has an effect of illuminating a wider area of the object surface S by using the image-forming optical element array 16 rather than using one lens element 16a.

Of the light having passed through the first wavelength emission surface 14a, the light having passed through the first-a wavelength emission region 22a propagates in parallel along the first optical axis L1 by the first lens element 16a and reaches the irradiation field F1. On the other hand, the light having passed through the first-b wavelength emission region 22b propagates in the direction inclined to the first optical axis L1 by the first lens element 16a and reaches the irradiation field F1.

Further, of the light having passed through the second wavelength emission surface 14b, the light having passed through the second-a wavelength emission region 24a propagates in parallel along the second optical axis L2 by the second lens element 16b, reaches the object surface S, and illuminates the object surface S. On the other hand, the light having passed through the second-b wavelength emission region 24b propagates in the direction inclined to the first optical axis L1 by the second lens element 16b, and reaches the irradiation field F1 formed by the light having passed through the first-b wavelength emission region 22b (step S1).

A light beam that has passed through the first-a wavelength emission region 22a and reached the irradiation field F1 is referred to as a first-a light beam B1a, and a light beam that has passed through the first-b wavelength emission region 22b and reached the same irradiation field F1 is referred to as a first-b light beam B1b. Further, a light beam that has passed through the second-b wavelength emission region 24b and reached the irradiation field F1 is defined as a second-b light beam B2b.

The controller 5 captures an image of the object surface S in the irradiation field F1 by the imaging portion 30. It is assumed that the object surface S is a flat surface. If the object surface S in the irradiation field F1 is a smooth surface, the first-a light beam B1a is specularly reflected, and reflected along the first optical axis L1. This reflected light is referred to as a third-a light beam B3a. Note that, for convenience, FIG. 8 illustrates the imaging side in mirror symmetry with respect to the object surface S. The third-a light beam B3a is directed to the image-forming point of the image-forming surface on the image sensor 36 by the image-forming optical element for imaging 32 of the imaging portion 30. However, the light of the wavelength-a is shielded by the first wavelength selection region 41 of the imaging opening 34 arranged in the imaging focal plane. That is, since the light of the wavelength-a that is the dominant wavelength of the wavelength spectrum-a is blocked, the third-a light beam B3a is imaged with weak light intensity (darkly) on the image sensor 36 (step S2).

On the other hand, the first-b light beam B1b and the second-b light beam B2b are also specularly reflected by the object surface S, and reflected in a direction oblique to the first optical axis L1. The reflected light beams are referred to as a fourth-b light beam B4b and a fifth-b light beam B5b, respectively. These light beams B4b and B5b are directed to the image-forming point of the image-forming surface on the image sensor 36 by the image-forming optical element for imaging 32 of the imaging portion 30. However, the light of the wavelength-b is shielded by the second wavelength selection region 42 of the imaging opening 34 arranged in the imaging focal plane. That is, since the light of the wavelength-b that is the dominant wavelength of the wavelength spectrum-b is blocked, the fourth-b light beam B4b and the fifth-b light beam B5b are imaged with weak intensity (darkly) on the image sensor 36.

From the above, if the object surface S is a smooth surface, the image obtained by imaging the irradiation field F1 becomes dark. In other words, it can be said that the object surface S is not imaged by the image sensor 36.

The controller 5 analyzes a light reception signal (image) from the image sensor 36 (step S3).

Since the object surface S is not imaged on the image sensor 36 by the irradiation with the light from the light emission portion 12, the controller 5 outputs information indicating that the object surface S is a smooth surface (step S4).

Next, a case where the smooth surface of the object surface S has minute asperities will be discussed. In this case, the first-a light beam B1a is scattered by the minute asperities and is reflected obliquely with respect to the first optical axis L1. Then, the first-a light beam B1a reaches the second wavelength selection region 42 of the imaging opening 34 arranged in the imaging focal plane of the image-forming optical element for imaging 32. Since the light of the wavelength spectrum-a passes through the second wavelength selection region 42, the scattered light of the first-a light beam B1a is imaged with strong light intensity (brightly) on the image sensor 36. On the other hand, the first-b light beam B1b and the second-b light beam B2b are also scattered by the minute asperities on the object surface S, and are reflected in a direction oblique to the first optical axis L1. Then, the first-b light beam B1b and the second-b light beam B2b reach the first wavelength selection region 41 of the imaging opening 34 arranged in the imaging focal plane of the image-forming optical element for imaging 32. Since the light of the wavelength spectrum-b passes through the first wavelength selection region 41, the fourth-b light beam B4b and the fifth-b light beam B5b are imaged with strong intensity (brightly) on the image sensor 36.

From the above, if the object surface S has minute asperities, the image sensor 36 captures the minute asperities clearly and brightly (step S2). The smooth surface and the surface with minute asperities have different colors (hues).

The controller 5 analyzes a light reception signal (image) from the image sensor 36 (step S3).

Since the object surface S is imaged by the image sensor 36 with the irradiation of the light from the light emission portion 12, the controller 5 outputs information indicating that the object surface S has minute asperities (a part of the irradiation field F1 where an image is obtained by the image sensor 36 is not a simple smooth surface.) (step S4). Thus, the use of the optical inspection system 1 according to the present arrangement has an effect that minute asperities can be reliably detected.

That is, as illustrated in FIG. 9, the controller 5 controls the light emission portion 12 to emit the illumination light including the wavelength-a and wavelength-b toward the wavelength emission surface 14, and illuminates the irradiation field F1 of the object surface S with the illumination light including the wavelength-a and wavelength-b through the wavelength emission surface 14 and the image-forming optical element array 16 (step S1). The controller 5 controls the image sensor 36 to acquire light (reflected light, transmitted light, and the like) from the irradiation field F1 (step S2). The controller 5 analyzes whether at least one of the wavelength-a and wavelength-b of light has been acquired by the image sensor 36 or none of them has been acquired (step S3). Then, the controller 5 outputs the surface property of the irradiation field F1 of the object surface S using the analysis results (step S4). Therefore, the controller 5 acquires object information based on the light reception signal captured by the image sensor 36 of the imaging portion 30.

However, when light having passed through the first-b wavelength emission region 22b passes through the first lens element 16a to form the irradiation field F1, the illuminance distribution of the irradiation field F1 generally has unevenness. Even if the illuminance of the light passing through the first-b wavelength emission region 22b is uniform in the same region, the light beam group incident on the first lens element 16a is changed in different directions, so that the illuminance distribution of the irradiation field formed by the light beam group becomes non-uniform. Therefore, the illuminance distribution of the irradiation field F1 is made uniform using the lens array 16 including the plurality of lens elements 16a and 16b.

The lens array 16 may also be called a fly-eye lens array or a micro-lens array. The illuminance distribution is made uniform by superimposing the irradiation fields F1 formed by the lens elements 16a and 16b. In this manner, even if the irradiation fields F1 formed by the lens elements 16a and 16b are non-uniform, superimposing them forms the uniform irradiation field F1.

The use of the optical inspection system 1 according to the present arrangement makes it possible to superimpose the irradiation field F1 formed by the light of the wavelength spectrum-b having passed through the second-b wavelength emission region 24b on the irradiation field F1 formed by the light of the wavelength spectrum-b having passed through the first-b wavelength emission region 22b. That is, with the use of the lens array 16, the optical inspection system 1 according to the present arrangement has an effect of making the illuminance distribution uniform with light from a plurality of directions having the same wavelength spectrum-b.

In the present arrangement, since the illuminance distribution in the irradiation field F1 can be made uniform, it is possible to reduce the fluctuation of the intensity of the reflected light from each object point on the smooth surface due to the illuminance unevenness, for example. Then, if the surface is not flat but has minute asperities, the light intensity and color (hue) from the minute asperities can be greatly changed at the same time as compared with the case of the smooth surface. This makes it possible to increase the difference in intensity of the reflected light between the case where the object surface S is a smooth surface and the case where the object surface S has minute asperities. That is, as compared with the case where the illuminance distribution in the irradiation field F1 is non-uniform, the minute asperities can be sharpened by the intensity of the reflected light in the case where the illuminance distribution is made uniform using the optical inspection system 1 according to the present arrangement. That is, the use of the optical inspection system 1 according to the present arrangement makes it easy to make uniform the illuminance distribution and detect the presence of minute asperities.

In the light emission portion 12 of the present arrangement, a white LED is used as a light source, as an example. The light source may have another configuration.

As described above, the use of the optical inspection system 1 according to the present arrangement has an effect that the irradiation field F1 of a more uniform illuminance distribution can be formed, and the surface information of the object in the irradiation field F1 can be more accurately acquired from the light intensity or the color (hue) information.

Therefore, according to the present arrangement, it is possible to provide the optical apparatus 10, the optical inspection system 1, and the optical inspection method that can acquire information of the object O by irradiating the same irradiation field F1 of the object O with light of the plurality of wavelength-a and wavelength-b.

(Modifications)

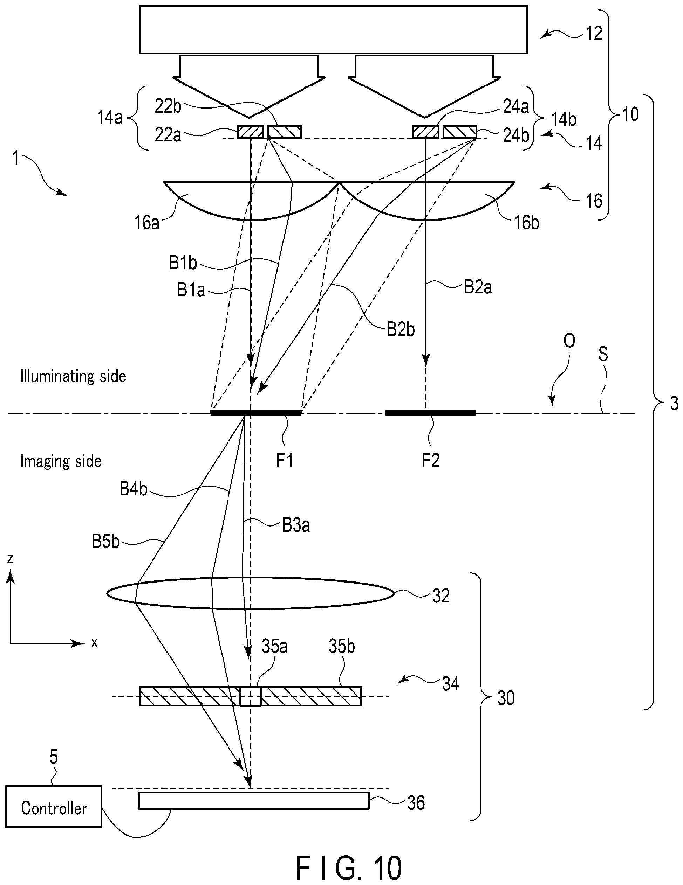

FIG. 10 is a cross-sectional view of an optical inspection system 1 according to a modification of the present arrangement. In the present modification, an example in which an imaging opening 34 of an imaging portion 30 is changed from the imaging opening 34 illustrated in FIG. 8 will be described.

The imaging opening 34 of the imaging portion 30 of the present modification includes a center through-hole 35a, and the periphery thereof is a light blocking plate that has a light blocking region 35b where visible light is blocked. The light intensity in the visible light region of a wavelength spectrum-a is substantially zero and cannot be detected by an image sensor 36 of the imaging portion 30. The dominant wavelength of a wavelength spectrum-b is 650 nm, which is defined as wavelength-b. That is, the light of the wavelength spectrum-b is red light.

The center through-hole 35a of the imaging opening 34 is set as a first wavelength selection region through which visible light is allowed to pass. That is, at least light of the wavelength spectrum-b is allowed to pass through the first wavelength selection region. On the other hand, the surrounding light blocking region 35b is set as a second wavelength selection region through which light of the wavelength spectrum-b including light of the wavelength-b is not allowed to pass. That is, the light of the wavelength spectrum-b is blocked in the second wavelength selection region.

An object surface S in an irradiation field F1 is a smooth plane. The object surface S in the irradiation field F1 is imaged by the image sensor 36. At this time, the light of the wavelength spectrum-b emitted from a first-b wavelength emission region 22b and a second-b wavelength emission region 24b is specularly reflected by the object surface S and then blocked by the second wavelength selection region (light blocking region) 35b of the imaging opening 34. Therefore, the light intensity in the image sensor 36 becomes sufficiently low, and the image of the object surface S is not captured by the image sensor 36.

On the other hand, if the object surface S has minute asperities in the irradiation field F1, the light of the wavelength spectrum-b is scattered by the minute asperities to spread a BRDF. Accordingly, the light of the wavelength spectrum-b reaches the first wavelength selection region (center through-hole) 35a of the imaging opening 34, further passes through the region 35a, and then reaches the image sensor 36. Therefore, the use of the optical inspection system 1 according to the present modification has an effect that only the minute asperities can be brightly and clearly imaged by the image sensor 36.

Therefore, according to the present modification, it is possible to provide the optical apparatus 10, the optical inspection system 1, and the optical inspection method that can acquire information of the object O by irradiating the same irradiation field F1 of the object O with light of the plurality of wavelength-a and wavelength-b.

(Third Arrangement)

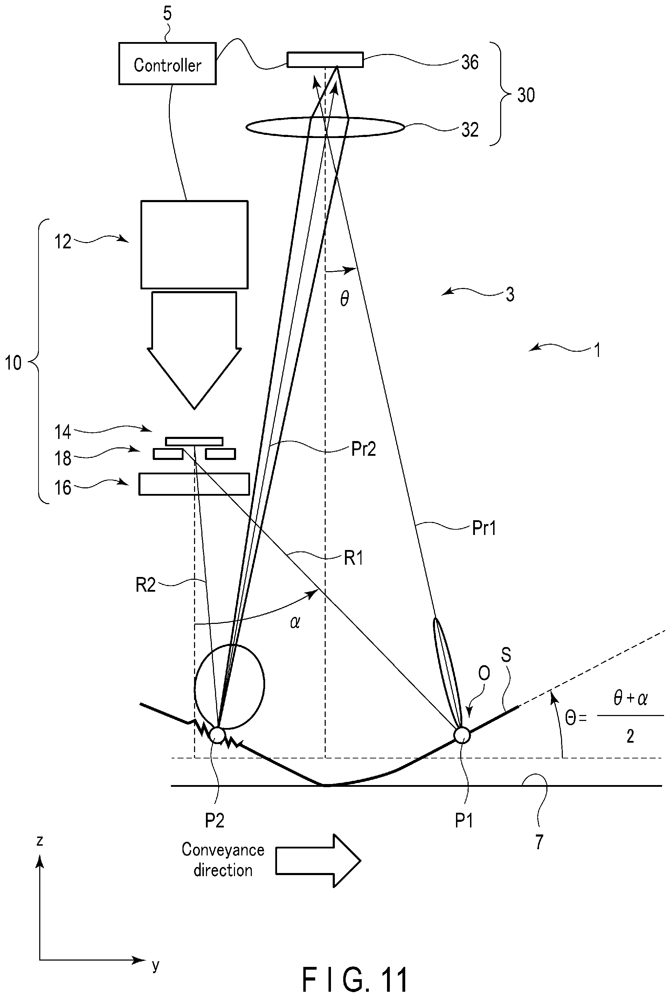

Hereinafter, an optical inspection system 1 according to the present arrangement will be described in detail with reference to FIGS. 11 to 13. The present arrangement is a modification of the first arrangement and the second arrangement. The same members or members having the same functions as the members described above in the first arrangement and/or the second arrangement are denoted by the same reference numerals as much as possible, and detailed description thereof will be omitted.

FIG. 11 is a cross-sectional view of the optical inspection system 1 according to the present arrangement. This cross section is a yz cross section unlike the zx cross section in FIGS. 1 to 4, 8, and 10. The optical inspection system 1 according to the present arrangement includes an optical inspection apparatus 3, a controller 5, and a conveyance portion 7.

The controller 5 only needs to be able to control at least one of a light emission portion 12 of an optical apparatus 10, an image sensor 36 of an imaging portion 30, or the conveyance portion 7.

As described above in the second arrangement, the optical inspection apparatus 3 includes an illumination portion 10 and the imaging portion 30. The illumination portion 10 includes a light emission portion 12 and an image-forming optical element array 16. The light emission portion 12 and the image-forming optical element array 16 described above in the first arrangement and the second arrangement can be used as appropriate.

FIG. 11 does not illustrate a specific configuration of the conveyance portion 7. The conveyance portion 7 conveys an object O by an appropriate conveyor or the like, for example. A direction of conveyance of the object O by the conveyance portion 7 is a y-axis direction.

Referring to FIG. 11, the object O is conveyed in the conveyance direction. The conveyance direction is a positive direction of the y axis. However, the object O in the present arrangement is not limited to this, and the object O may be fixed, and the illumination portion 10 and the imaging portion 30 may be simultaneously conveyed. That is, the conveyance portion 7 may convey the optical inspection apparatus 3 in the y-axis direction, for example, instead of conveying the object O to be inspected. In the present arrangement, the conveyance portion 7 only needs to be able to relatively move the object O to be inspected and the optical inspection apparatus 3 in the y-axis direction. In other words, the conveyance portion 7 may convey at least one of the object O, and the optical apparatus 10 and the imaging portion 30. FIG. 11 is a schematic diagram illustrating an instantaneous positional relationship among components at a certain time.

In the present arrangement, an object point of the object O moves together with the object O due to the conveyance by the conveyance portion 7. That is, the position of the object point is defined as a position relative to the object O. At this time, an image point corresponding to the object point moves along with conveyance in the image acquired by the imaging portion 30.

The illumination portion 10 of the optical inspection apparatus 3 includes the light emission portion 12, the image-forming optical element array 16, and an illumination opening 18.

The light source of the light emission portion 12 emits a first light beam B1 toward a first wavelength emission surface 14a, and simultaneously emits a second light beam B2 toward a second wavelength emission surface 14b. The image-forming optical element array 16 is a lenticular lens constituted of a plurality of cylindrical lenses (including at least image-forming optical elements 16a and 16b arranged in an x-axis direction). Each of the lenticular lenses 16a and 16b has translational symmetry in the y-axis direction.

As light sources, the light emission portion 12 has a plurality of white LEDs arranged in series in a direction (x-axis direction) orthogonal to the present cross section. The light emission portion 12 collimates the light from the light sources once by the cylindrical lens. However, it should be noted that the light beam group projected in the cross section illustrated in FIG. 11 is collimated light.

In the wavelength emission surface 14, color filters that selectively transmit the light of the wavelength spectrum-a and the light of the wavelength spectrum-b are arranged in wavelength emission regions 22a and 24a and wavelength emission regions 22b and 24b in the first wavelength emission surface 14a and the second wavelength emission surface 14b described above in the first arrangement, respectively. The collimated light from the light sources of the light emission portion 12 passes through the color filters 22a, 22b, 24a, and 24b. The light that reaches the first wavelength emission surface 14a after passing through the color filters 22a, 22b, 24a, and 24b is defined as a first light beam B1, and the light that reaches the second wavelength emission surface 14b is defined as a second light beam B2.

By using the light emission portion 12 and the wavelength emission surface 14, the light of the wavelength spectrum-a is emitted from the wavelength emission regions 22a and 24a of the first wavelength emission surface 14a and the second wavelength emission surface 14b, and the light of the wavelength spectrum-b is emitted from the wavelength emission regions 22b and 24b of the first wavelength emission surface 14a and the second wavelength emission surface 14b.

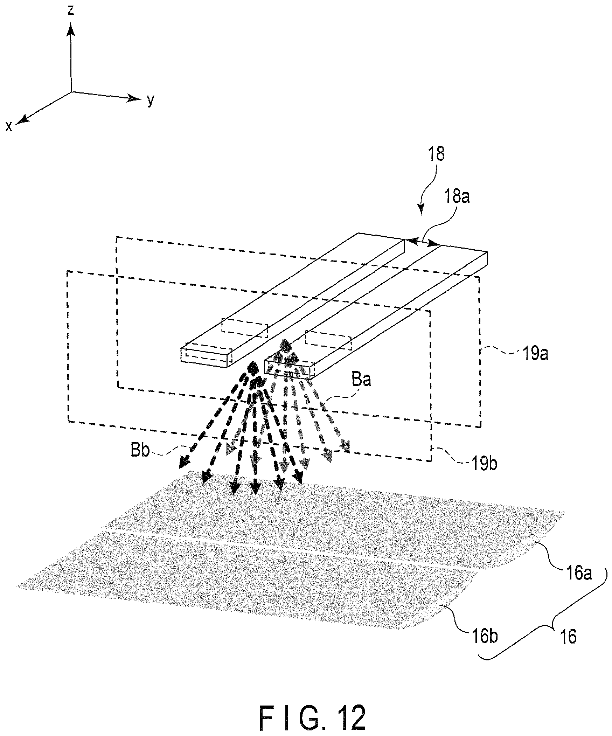

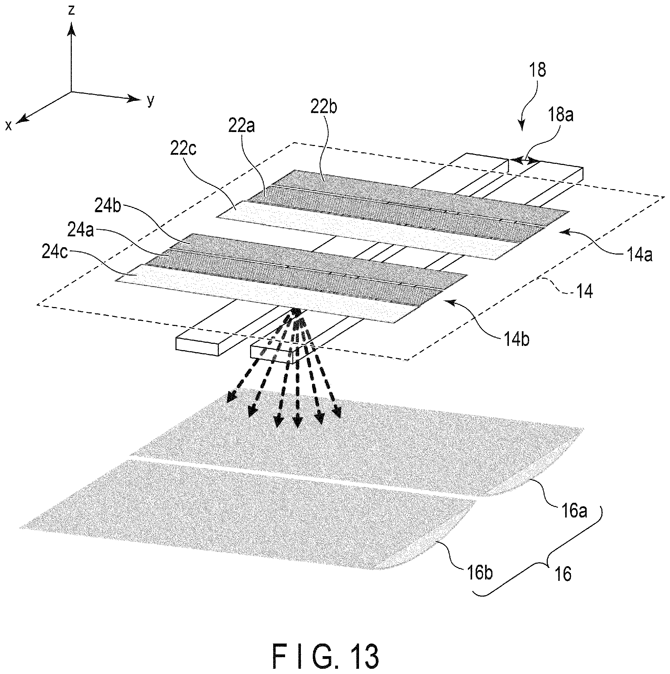

As illustrated in FIGS. 12 and 13, the image-forming optical elements 16a and 16b of the image-forming optical element array 16 are lenticular lenses. Optical axes of the lens elements 16a and 16b are parallel to a z axis, and an xy plane is orthogonal to the z axis. The first lens element 16a and the second lens element 16b are the same. A focal plane of the first lens element 16a and a focal plane of the second lens element 16b are on the same plane. The focal planes are parallel to the xy plane.

In the present arrangement, the illumination opening 18 has a slit shape extending in the x-axis direction and having a small width in the y-axis direction. The illumination opening 18 has the same shape in at least two parallel reference planes, that is, a first reference plane (cross section) 19a and a second reference plane (cross section) 19b that are parallel to a yz plane. That is, the illumination opening 18 has an opening width (slit) 18a having the same size in the y-axis direction in the reference cross sections 19a and 19b of FIG. 12. In the reference planes 19a and 19b, the opening width 18a along the y-axis direction is sufficiently smaller than the visual field width imaged by the image sensor 36 of the imaging portion 30. Accordingly, light beam groups projected on the reference cross sections 19a and 19b are formed in a substantially fan shape by the illumination opening 18 in the present optical system. The fan light beam means a light beam that expands radially (in a fan shape) from a light source (or secondary light source) that can be substantially regarded as a point. A fan-shaped light beam group formed by the illumination opening 18 is referred to as a fan light beam group. Since the illumination opening 18 has the same shape in the first reference plane 19a and the second reference plane 19b parallel to the yz plane, a first fan light beam group Ba and a second fan light beam group Bb having equivalent expansions are formed regardless of the positions along the x-axis direction. That is, the light from the light emission portion 12 is formed into fan light beam groups that expand in a fan shape toward the object O by the illumination opening 18 in the reference plane 19a including an optical axis L1 of the first image-forming optical element 16a and the reference plane 19b including an optical axis L2 of the second image-forming optical element 16b. However, it should be noted that the fan-shaped light beam groups Ba and Bb are light beams obtained by projecting the light from the light emission portion 12 onto the reference cross sections 19a and 19b, respectively.

As illustrated in FIGS. 11 and 13, the direction in which the first wavelength emission surface 14a and the second wavelength emission surface 14 are arranged side by side is orthogonal to the conveyance direction of the conveyance portion 7. As illustrated in FIG. 13, the first wavelength emission surface 14a and the second wavelength emission surface 14b each include wavelength emission regions 22a, 22b, 22c, 24a, 24b, and 24c having translational symmetry in the y axis, as color filters, phosphors, or the like, for example. That is, the first wavelength emission surface 14a has three different wavelength emission regions 22a, 22b, and 22c. Similarly, the second wavelength emission surface 14b has three different wavelength emission regions 24a, 24b, and 24c. The wavelength emission region 22a of the first wavelength emission surface 14a and the wavelength emission region 24a of the second wavelength emission surface 14b cause light of the wavelength spectrum-a having the wavelength-a as the dominant wavelength. The wavelength emission region 22b of the first wavelength emission surface 14a and the wavelength emission region 24b of the second wavelength emission surface 14b cause light of the wavelength spectrum-b having the wavelength-b pass as the dominant wavelength. The wavelength emission region 22c of the first wavelength emission surface 14a and the wavelength emission region 24c of the second wavelength emission surface 14b cause light of the wavelength spectrum-c having the wavelength-c pass as the dominant wavelength. The wavelength-a is blue light of 450 nm, the wavelength-b is red light of 650 nm, and the wavelength-c is green light of 550 nm. Accordingly, the controller 5 can acquire (observe) the spread of a BRDF of the light from the object O in the x-axis direction as changes in color (hue) based on the flow described above with reference to FIG. 9. Furthermore, the irradiation fields F1 formed by the first lens element 16a and the second lens element 16b can be superimposed, which has an effect of reducing the illuminance unevenness.

The direction distribution of the reflected light from the object point on the surface of the object (object surface) S can be expressed by a distribution function called BRDF. The BRDF generally varies depending on a surface state (surface property or surface shape). For example, when the surface is rough, the reflected light spreads in various directions, so that the BRDF has a wide distribution. That is, the reflected light exists over a wide angle. On the other hand, if the surface is a mirror surface, the reflected light includes substantially only specular reflection components, and the BRDF has a narrow distribution. In this manner, the BRDF reflects the surface state of the surface of the object (object surface S). In particular, the BRDF generally greatly changes by minute asperities with a size of 10 times or less the wavelength of light.

The BRDF depends on an incident angle of light on the object surface S and a reflection angle (scattering angle) of light from the object surface S. In addition, not only the dependence of the intensity distribution on the reflection angle where the incident angle of the light on the object surface S is constant but also the dependence of the intensity distribution on the incident angle where the reflection angle of the light from the object surface S is constant, are similarly important information reflecting the state (information) of the object surface.

When illumination light from the illumination portion 10 is reflected or transmitted at an object point in the object O, the imaging portion 30 forms an image of light from the object on the image sensor 36. Accordingly, an image of the object can be acquired. That is, the object is imaged by light.

In the present arrangement, the object is opaque and reflects light on the object surface S. However, the object in the present arrangement is not limited to this configuration, and the object may be transparent or may transmit light. In that case, the imaging portion is arranged on the side where the light from the illumination portion passes through the object.

Under the above configuration, an operation principle of the optical inspection system 1 according to the present arrangement will be described.

In the surface (object surface S) of the object O illustrated in FIG. 11, a first object point P1 is a smooth surface. At this time, the reflected light from the first object point P1 is substantially specularly reflected light, and the BRDF has only a narrow distribution of specular components (specular reflection components). On the other hand, a second object point P2 has a minute defect, and the BRDF has a wide distribution.

If the xy plane in the coordinate system in FIG. 11 is set as a reference (horizontal plane with respect to the ground), the object surface S has various inclinations relative to the reference plane. At this time, in the yz cross section in FIG. 11, the inclination of the object surface S with respect to the y axis is defined as $\Theta$, and the counterclockwise direction is defined as a positive direction. The inclination $\Theta$ is referred to as an inclination angle of the object surface S. Hereinafter, unless otherwise specified, the angle in the yz cross section is set such that the counterclockwise direction is the positive direction.

In addition, an angle formed by the direction of first illumination light R1 from the illumination portion 10 and the negative direction of the z axis is $\alpha$. In the present

arrangement, the angle $\alpha$ is referred to as an incident angle. If the object surface S is a mirror surface at the first object point P1, the incident light on the object surface S is specularly reflected.

The imaging portion 30 captures an image by condensing a light flux having an intensity distribution represented by the BRDF at the object points P1 and P2 on an image point on the image sensor 36. A light beam along a straight line passing through both the first object point P1 and the image point is referred to as a main light beam Pr1. An angle formed between the principal beam Pr1 and the negative direction of the z axis is defined as $\theta$. In the present arrangement, the angle $\theta$ is referred to as a reflection angle. The optical axis of the imaging portion 30 is parallel to the z axis.

At this time, the inclination angle $\Theta$ of the object that can be imaged by the first illumination light R1 can be expressed by the following Formula (1).

$$\Theta = (\theta + \alpha) / 2 \quad ... \quad (1)$$

This relationship is not limited to the first object point P1, and the same applies to the second object point P2 and the other object points. For the second object point P2, a second illumination light R2 and a main light beam Pr2 can be represented as in FIG. 11. Also, in this case, the incident angle $\alpha$ and the reflection angle $\theta$ can be set.

In the light beam group projected on the yz cross section of FIG. 11, the illumination light is a fan light beam having various incident directions. That is, the illumination portion 10 can irradiate the object O with illumination beams from various angles in the range of the angle $\alpha$ that the illumination beams can take. Therefore, the controller 5 can make illumination beams at various angles incident on each object point to capture images, by acquiring an image continuously (at an appropriate frame rate) by the illumination portion 10 and the imaging portion 30 while using the conveyance portion 7 to gradually move the object O in the conveyance direction (+y-axis direction), for example. That is, the optical inspection apparatus 3 can irradiate each object point on the object surface S with incident light in various directions and capture an image of the object surface S each time. Accordingly, even if there is an inclination in the object point and the reflected light is not directed to the imaging portion 30 but goes off course at a certain moment, the object O is conveyed by the conveyance portion 7, so that it is possible to emit light in an incident direction to be reflected toward the imaging portion 30 at another moment. That is, even with the object O having the object surface S of various inclinations, the object surface S of the object O can be imaged by repeatedly irradiating the object O with illumination light in the appropriate directions while the object O is conveyed in a predetermined direction.

For example, attention is paid to the first object point P1. The incident angle $\alpha$ of the first object point P1 changes with time while the first object point P1 is conveyed by the conveyance portion 7. That is, the incident angle changes variously. At the same time, the reflection angle $\theta$ also changes variously. Accordingly, as is clear from Formula (1), the inclination angle $\Theta$ at which an image is to be captured also changes variously. That is, the optical inspection apparatus 3 of the optical inspection system 1 can capture of an image of the object O having various inclinations.

Since the first object point P1 is on the mirror surface, the angle distribution of the BRDF is narrow, and the reflected light from the first object point P1 with respect to the illumination light by the fan beam has substantially only specular reflection components. That is, in Formula (1), the reflection angle $\theta$ corresponding to the incident angle $\alpha$ is uniquely determined. Therefore, the optical inspection system 1 according to the present arrangement can capture an image of the first object point P1 only when the incident angle $\alpha$ and the reflection angle $\theta$ uniquely determined by the incident angle $\alpha$ satisfy the relationship of Formula (1) with respect to the inclination angle $\Theta$ at the first object point P1. That is, the first object point P1 is imaged while the incident angle $\alpha$ satisfies Formula (1).

On the other hand, since the second object point P2 is on the minute defect, the BRDF is wide, and the reflected light contains many scattered light components. Thus, there are various reflection angles $\theta$ corresponding to the incident angle $\alpha$. Therefore, even if the incident angle $\alpha$ takes various values with respect to the inclination angle $\Theta$ at the second object point P2, the relationship of Formula (1) is satisfied. If the conveyance speed of the conveyance portion 7 is constant, for example, in the optical inspection system 1, the second object point P2 is formed brightly on the image sensor 36 of the imaging portion 30 for a longer time than the first object point P1. This has an effect that the controller 5 can detect a minute defect (second object point P2) on the object O by the intensity of light and the time width on the image sensor 36.

The optical inspection system 1 according to the present arrangement performs steps S3 and S4 of the flow illustrated in FIG. 9 using a plurality of images of the object O that is acquired by the imaging portion 30 while the object O is conveyed by the conveyance portion 7, which has an effect of easily and accurately identifying a minute defect on the object O. For example, in the case of analyzing light reception signals from which images have been obtained (see step S3 in FIG. 9), the controller 5 superimposes a plurality of images captured by the imaging portion 30 at regular time intervals during conveyance such that the object points P1 coincide with each other and the object points P2 coincide with each other. Since the angular distribution of the BRDF of a minute defect is wide, the minute defect is captured (detected) in many images as compared with the case of a smooth surface. Accordingly, the pixel value is increased in the images in which the object points P1 and P2 are superimposed, which has an effect that a minute defect can be brightened and sharpened. In addition, there is an effect that a minute defect can be easily identified with high accuracy.

If the object O is long as appropriate in the conveyance direction, steps S3 and S4 illustrated in FIG. 9 may be performed while the object O to be conveyed by the conveyance portion 7 is divided by an appropriate length. In this case, it is possible to output the surface property of the object surface S over the entire length direction of the object O by acquiring the images of partial regions superimposed in the conveyance direction.

The BRDF at the object points P1 and P2 of the object O changes depending on the incident angle. The controller 5 can output the details of the surface property of the object O (the state of the surface of the object) at the object points P1 and P2 by grasping the dependency of the BRDF on the incident angle. Therefore, the optical inspection system 1 according to the present arrangement can obtain BRDF for various incident angles, which has an effect that detailed information of the object points P1 and P2 can be acquired.

Referring to FIG. 13, a light beam that is incident on the object point of the object O and is projected on an xz plane will be discussed. At this time, the incident angle of the light beam direction with respect to the z axis can be identified by the wavelength spectrum. That is, in the image captured on the image sensor 36 in the imaging portion 30, the dominant wavelengths (that is, the wavelength-a, the wavelength-b, and the wavelength-c) of the wavelength spectra can be distinguished by the pixel value of each color channel of the pixel of the image point formed by reflecting the light beam at the object points P1 and P2. Accordingly, the controller 5 can identify the incident angle of the light beam projected on the xz plane. This has an effect that the controller 5 can distinguish the BRDF information by color (hue) and acquire the BRDF information at the same time for the light beam that is incident on the object point and is projected on the xz plane at various incident angles. In this manner, the optical inspection system 1 can acquire more detailed BRDF information of the object O based on the color (hue) information acquired by the image sensor 36.

When an object point is on a smooth surface, reflected light of illumination light to the object point is specularly reflected light. At this time, the direction of the specularly reflected light can be identified by the pixel position when the specularly reflected light is imaged on the image sensor 36. The reflected light from the object point generally has a high light intensity of a specular reflection component even if the light is scattered light with a wide BRDF. Therefore, if an image with a highest light intensity (for example, a highest pixel value) at the object point is selected from among a plurality of images captured during the conveyance of the object O, the image can be estimated to be formed by the specular reflection component. Accordingly, the controller 5 can identify the specular reflection direction of the object point of the object at the pixel position of the image.

If the light beam incident on the object point of the object O is projected on the xz plane, the incident angle with respect to the z axis can be identified by the wavelength spectrum as described above.

On the other hand, referring to FIG. 13, a light beam that is incident on the object point of the object O and is projected on the yz plane will be discussed. At this time, the incident angle of the light beam direction with respect to the z axis can be limited (identified within a certain range) by the pixel position and the intensity when the light beam is specularly reflected at the object point and formed on the image sensor 36. This is because, in the light beam projected on the yz plane, the incident light beam can be regarded as a fan-like light beam emitted from one point, and thus an end point (start point) is determined. The other end point (object point) exists on a line along the direction of the specularly reflected light determined by the pixel position. The z position of the object point is present within a range in which an image can be formed on the image sensor 36 by the imaging portion 30. As such, the incident angle of the light beam that is incident on the object point and is projected on the yz plane with respect to the z axis can also be identified within a certain range.

From the above, the direction (specular reflection direction) of the specular reflection component of the reflected light from the object point can be acquired from the pixel position of the image, and the direction of the light beam incident on the object point can be limited from the color (hue) and the pixel position of the image. It is known that if the specular reflection direction can be identified and the incident direction can be limited, the three-dimensional shape of the object can be limited by reconstruction. Thus, the use of the optical inspection system 1 according to the present arrangement has an effect that the three-dimensional shape of an object can be limited (identified within a certain range).

Therefore, according to the present arrangement, it is possible to provide the optical apparatus 10, the optical inspection system 1, and the optical inspection method that can acquire information of the object O by irradiating the same irradiation field F1 of the object O with light of the plurality of wavelength-a, wavelength-b and wavelength-c.

According to at least one of the arrangements described above, it is possible to provide the optical apparatus 10, the optical inspection system 1, and the optical inspection method that can acquire information of the object O by irradiating the same irradiation field F1 of the object O with light of the plurality of wavelength-a and wavelength-b.

According to the above arrangements, the following clauses can be obtained.

Clause 1. An optical apparatus comprising:

a light emission portion configured to emit light;
an image-forming optical element array that includes at least a first image-forming optical element and a second image-forming optical element;
a first wavelength emission surface including:

a first wavelength emission region that, when light is emitted from the light emission portion, is configured to emit, by the light, light of a first wavelength spectrum toward the image-forming optical element array; and
a second wavelength emission region that, when light is emitted from the light emission portion, is configured to emit, by the light, light of a second wavelength spectrum different from the light of the first wavelength spectrum toward the image-forming optical element array; and

a second wavelength emission surface that is arranged at a position different from the first wavelength emission surface and has the first wavelength emission region and the second wavelength emission region like the first wavelength emission surface,
wherein: the first wavelength emission surface is positioned at or near a focal plane of the first image-forming optical element, and
the second wavelength emission surface is positioned at or near a focal plane of the second image-forming optical element.

Clause 2. The optical apparatus according to Clause 1, wherein:

the first image-forming optical element of the image-forming optical element array forms a first irradiation field by the light of the first wavelength spectrum emitted from the first wavelength emission region of the first wavelength emission surface and the light of the second wavelength spectrum emitted from the second wavelength emission region of the first wavelength emission surface, and
the second image-forming optical element of the image-forming optical element array is arranged such that a region in which light is superimposed on the first irradiation field is formed by one of the light of the first wavelength spectrum emitted from the first wavelength emission region of the second wavelength emission surface and the light of the second wavelength spectrum emitted from the second wavelength emission region of the second wavelength emission surface.

Clause 3. The optical apparatus according to Clause 1 or 2, wherein:

the light emission portion is a projection portion that is configured to project an image with light from the light emission portion, and
the projection portion is configured to project similar images onto the first wavelength emission surface and the second wavelength emission surface at a same time.

Clause 4. The optical apparatus according to any one of Clauses 1 to 3, wherein

the light emission portion includes a first light source that is configured to emit the light of the first wavelength spectrum and a second light source that is configured to emit the light of the second wavelength spectrum,
the first light source is arranged in the first wavelength emission region of each of the first wavelength emission surface and the second wavelength emission surface, and
the second light source is arranged in the second wavelength emission region of each of the first wavelength emission surface and the second wavelength emission surface.

Clause 5. The optical apparatus according to any one of Clauses 1 to 4, further comprising:

a first filter that is arranged in each of the first wavelength emission regions and is configured to pass the light of the first wavelength spectrum; and
a second filter that is arranged in each of the second wavelength emission regions and is configured to pass the light of the second wavelength spectrum.

Clause 6. The optical apparatus according to any one of Clauses 1 to 5, further comprising:

a first phosphor that is arranged in each of the first wavelength emission regions and is configured to emit the light of the first wavelength spectrum-by excitation light from the light emission portion; and
a second phosphor that is arranged in each of the second wavelength emission regions and is configured to emit the light of the second wavelength spectrum-by excitation light from the light emission portion.

Clause 7. An optical inspection system comprising:

the optical apparatus according to any one of Clauses 1 to 6;
an imaging portion including an image-forming optical element for imaging and an image sensor, and is configured to image an object; and
a controller configured to control the image sensor, wherein the controller is configured to acquire information of the object based on a light reception signal captured by the image sensor of the imaging portion.

Clause 8. The optical inspection system according to Clause 7, wherein:

the image sensor of the imaging portion is configured to distinguish at least two different wavelengths included in the first wavelength spectrum and the second wavelength spectrum, and
the controller is configured to acquire information of the object based on a hue of the light reception signal captured by the image sensor of the imaging portion.

Clause 9. The optical inspection system according to Clause 7 or 8, further comprising:
an imaging opening provided in a focal plane of the image-forming optical element for imaging between the image-forming optical element for imaging and the image sensor.

Clause 10. The optical inspection system according to any one of Clauses 7 to 9, further comprising:
a conveyance portion that is configured to convey at least one of the object or the optical apparatus and the imaging portion.

Clause 11. The optical inspection system according to Clause 10, wherein the first wavelength emission surface and the second wavelength emission surface are arranged side by side in a direction orthogonal to a conveyance direction of the conveyance portion.

Clause 12. The optical inspection system according to any one of Clauses 7 to 11, wherein:

the light from the light emission portion is formed into a fan light beam group that spreads in a fan shape toward the object by an illumination opening in a reference plane including an optical axis of the first image-forming optical element and a reference plane including an optical axis of the second image-forming optical element, and
the controller causes the fan light beam group to illuminate the object, and is configured to acquire the information of the object based on a light reception signal captured by the image sensor of the imaging portion.

Clause 13. The optical inspection system according to any one of Clauses 7 to 12, wherein:

the optical inspection system causes the light to illuminate the object using the optical apparatus as an illumination portion, and
the controller is configured to acquire information on a BRDF of the object based on a hue of light from the object.

Clause 14. The optical inspection system according to any one of Clauses 7 to 13, wherein
the controller is configured to control at least one of the light emission portion, the imaging portion, or the conveyance portion of the optical apparatus.

Clause 15. An optical inspection method comprising:

emitting light of a first wavelength spectrum from a first-a wavelength emission region toward a first image-forming optical element of an image-forming optical element array;
emitting light of a second wavelength spectrum different from the first wavelength spectrum from a first-b wavelength emission region toward the first image-forming optical element of the image-forming optical element array;
emitting the light of the first wavelength spectrum from a second-a wavelength emission region different from the first-a wavelength emission region and the first-b wavelength emission region toward a second image-forming optical element different from the first image-forming optical element of the image-forming optical element array;
emitting the light of the second wavelength spectrum from a second-b wavelength emission region different from the first-a wavelength emission region, the first-b wavelength emission region, and the second-a wavelength emission region toward the second image-forming optical element of the image-forming optical element array; and
illuminating an object surface of an object with the light of the first wavelength spectrum and the light of the second wavelength spectrum that have passed through the first image-forming optical element, and the light of the first wavelength spectrum and the light of the second wavelength spectrum that have passed through the second image-forming optical element,
wherein the illuminating the object surface of the object includes irradiating a same first irradiation field with the light of the first wavelength spectrum and the light of the second wavelength spectrum that have passed through the first image-forming optical element.

Clause 16. The optical inspection method according to Clause 15, wherein the illuminating the object surface of the object includes forming a region in which light is superimposed on the first irradiation field by one of the light of the first wavelength spectrum emitted from the second-a wavelength emission region and the light of the second wavelength spectrum emitted from the second-b wavelength emission region.

Clause 17. The optical inspection method according to Clause 15 or 16, further comprising:

acquiring a hue of light from the object surface of the object by illuminating the object surface of the object; and
acquiring information on a BRDF of the object based on the hue of the light.

While certain arrangements have been described, these arrangements have been presented by way of example only, and are not intended to limit the scope of the inventions. Indeed, the optical apparatus, the optical inspection system, and the optical inspection method described herein may be embodied in a variety of other forms; furthermore, various omissions, substitutions and changes in the form of the optical apparatus, the optical inspection system, and the optical inspection method approaches described herein may be made.

**Claims**

1. An optical apparatus comprising:

   a light emission portion configured to emit light;
   an image-forming optical element array that includes at least a first image-forming optical element and a second image-forming optical element;
   a first wavelength emission surface including:

   a first wavelength emission region that, when light is emitted from the light emission portion, is configured to emit, by the light, light of a first wavelength spectrum toward the image-forming optical element array; and
   a second wavelength emission region that, when light is emitted from the light emission portion, is configured to emit, by the light, light of a second wavelength spectrum different from the light of the first wavelength spectrum toward the image-forming optical element array; and

   a second wavelength emission surface that is arranged at a position different from the first wavelength emission surface and has the first wavelength emission region and the second wavelength emission region like the first wavelength emission surface,
   wherein: the first wavelength emission surface is positioned at or near a focal plane of the first image-forming optical element, and
   the second wavelength emission surface is positioned at or near a focal plane of the second image-forming optical element.

2. The optical apparatus according to claim 1, wherein:

   the first image-forming optical element of the image-forming optical element array forms a first irradiation field by the light of the first wavelength spectrum emitted from the first wavelength emission region of the first wavelength emission surface and the light of the second wavelength spectrum emitted from the second wavelength emission region of the first wavelength emission surface, and
the second image-forming optical element of the image-forming optical element array is arranged such that a region in which light is superimposed on the first irradiation field is formed by one of the light of the first wavelength spectrum emitted from the first wavelength emission region of the second wavelength emission surface and the light of the second wavelength spectrum emitted from the second wavelength emission region of the second wavelength emission surface.

3. The optical apparatus according to claim 1 or 2, wherein:

   the light emission portion is a projection portion that is configured to project an image with light from the light emission portion, and
   the projection portion is configured to project similar images onto the first wavelength emission surface and the second wavelength emission surface at a same time.

4. The optical apparatus according to any one of claims 1 to 3, wherein

   the light emission portion includes a first light source that is configured to emit the light of the first wavelength spectrum and a second light source that is configured to emit the light of the second wavelength spectrum,
   the first light source is arranged in the first wavelength emission region of each of the first wavelength emission surface and the second wavelength emission surface, and
   the second light source is arranged in the second wavelength emission region of each of the first wavelength emission surface and the second wavelength emission surface.

5. The optical apparatus according to any one of claims 1 to 4, further comprising:

   a first filter that is arranged in each of the first wavelength emission regions and is configured to pass the light of the first wavelength spectrum; and
   a second filter that is arranged in each of the second wavelength emission regions and is configured to pass the light of the second wavelength spectrum.

6. The optical apparatus according to any one of claims 1 to 5, further comprising:

   a first phosphor that is arranged in each of the first wavelength emission regions and is configured to emit the light of the first wavelength spectrum-by excitation light from the light emission portion; and

a second phosphor that is arranged in each of the second wavelength emission regions and is configured to emit the light of the second wavelength spectrum-by excitation light from the light emission portion.

7. An optical inspection system comprising:

the optical apparatus according to any one of claims 1 to 6;
an imaging portion including an image-forming optical element for imaging and an image sensor, and is configured to image an object; and
a controller configured to control the image sensor,
wherein the controller is configured to acquire information of the object based on a light reception signal captured by the image sensor of the imaging portion.

8. The optical inspection system according to claim 7, wherein:

the image sensor of the imaging portion is configured to distinguish at least two different wavelengths included in the first wavelength spectrum and the second wavelength spectrum, and
the controller is configured to acquire information of the object based on a hue of the light reception signal captured by the image sensor of the imaging portion.

9. The optical inspection system according to claim 7 or 8, further comprising:
an imaging opening provided in a focal plane of the image-forming optical element for imaging between the image-forming optical element for imaging and the image sensor.

10. The optical inspection system according to any one of claims 7 to 9, further comprising:
a conveyance portion that is configured to convey at least one of the object or the optical apparatus and the imaging portion.

11. The optical inspection system according to any one of claims 7 to 10, wherein:

the light from the light emission portion is formed into a fan light beam group that spreads in a fan shape toward the object by an illumination opening in a reference plane including an optical axis of the first image-forming optical element and a reference plane including an optical axis of the second image-forming optical element, and

the controller causes the fan light beam group to illuminate the object, and is configured to acquire the information of the object based on a light reception signal captured by the image sensor of the imaging portion.

12. The optical inspection system according to any one of claims 7 to 11, wherein:

the optical inspection system causes the light to illuminate the object using the optical apparatus as an illumination portion, and
the controller is configured to acquire information on a BRDF of the object based on a hue of light from the object.

13. An optical inspection method comprising:

emitting light of a first wavelength spectrum from a first-a wavelength emission region toward a first image-forming optical element of an image-forming optical element array;
emitting light of a second wavelength spectrum different from the first wavelength spectrum from a first-b wavelength emission region toward the first image-forming optical element of the image-forming optical element array;
emitting the light of the first wavelength spectrum from a second-a wavelength emission region different from the first-a wavelength emission region and the first-b wavelength emission region toward a second image-forming optical element different from the first image-forming optical element of the image-forming optical element array;
emitting the light of the second wavelength spectrum from a second-b wavelength emission region different from the first-a wavelength emission region, the first-b wavelength emission region, and the second-a wavelength emission region toward the second image-forming optical element of the image-forming optical element array; and
illuminating an object surface of an object with the light of the first wavelength spectrum and the light of the second wavelength spectrum that have passed through the first image-forming optical element, and the light of the first wavelength spectrum and the light of the second wavelength spectrum that have passed through the second image-forming optical element,
wherein the illuminating the object surface of the object includes irradiating a same first irradiation field with the light of the first wavelength spectrum and the light of the second wavelength spectrum that have passed through the first image-forming optical element.

14. The optical inspection method according to claim 13, wherein the illuminating the object surface of the object includes forming a region in which light is superimposed on the first irradiation field by one of the light of the first wavelength spectrum emitted from the second-a wavelength emission region and the light of the second wavelength spectrum emitted from the second-b wavelength emission region.

15. The optical inspection method according to claim 13 or 14, further comprising:

acquiring a hue of light from the object surface of the object by illuminating the object surface of the object; and
acquiring information on a BRDF of the object based on the hue of the light.

FIG. 1

F I G. 2

F I G. 3

F I G. 4

F I G. 5

F I G. 6

F I G. 7

F I G. 8

```
        ┌─────────────┐
        │    Start    │
        └─────────────┘
               │
               ▼
   ┌────────────────────────────┐
   │    Emit illumination light │ ～S1
   └────────────────────────────┘
               │
               ▼
   ┌────────────────────────────┐
   │      Perform imaging       │ ～S2
   └────────────────────────────┘
               │
               ▼
   ┌────────────────────────────┐
   │  Analyze light reception signal │ ～S3
   └────────────────────────────┘
               │
               ▼
   ┌────────────────────────────┐
   │   Output surface property  │ ～S4
   └────────────────────────────┘
               │
               ▼
        ┌─────────────┐
        │     End     │
        └─────────────┘
```

F I G. 9

F I G. 10

F I G. 11

F I G. 12

F I G. 13

Europäisches
Patentamt

European
Patent Office

Office européen
des brevets

# EUROPEAN SEARCH REPORT

Application Number

EP 25 15 9904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/243213 A1 (KATO YUTAKA [JP]) 8 August 2019 (2019-08-08) | 1-11,13, 14 | INV. G01N21/88 |
| Y | * paragraphs [0026], [0035], [0040], [0045], [0058], [0072]; claims 1-20; figures 1-13 * | 12,15 | G01N21/89 |
| Y | EP 4 343 315 A1 (TOSHIBA KK [JP]) 27 March 2024 (2024-03-27) * paragraph [0020]; claim 1; figures 1, 6 * | 12,15 | |
| A | US 2019/242830 A1 (KATO YUTAKA [JP] ET AL) 8 August 2019 (2019-08-08) * paragraphs [0079], [0080]; claim 1; figures 1-3 * | 1-15 | |
| A | JP 2012 058091 A (IPRO LLC) 22 March 2012 (2012-03-22) * abstract; claim 1; figures 1, 3 * | 1-15 | |

| TECHNICAL FIELDS SEARCHED (IPC) |
|---|
| G01N |

The present search report has been drawn up for all claims

| Place of search | Date of completion of the search | Examiner |
|---|---|---|
| Berlin | 7 August 2025 | Koll, Hermann |

EPO FORM 1503 03.82 (P4C01)

## ANNEX TO THE EUROPEAN SEARCH REPORT
## ON EUROPEAN PATENT APPLICATION NO.

EP 25 15 9904

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2025

| Patent document cited in search report | | | Publication date | Patent family member(s) | | | Publication date |
|---|---|---|---|---|---|---|---|
| US 2019243213 | A1 | | 08-08-2019 | CN | 110118787 | A | 13-08-2019 |
| | | | | EP | 3524966 | A1 | 14-08-2019 |
| | | | | JP | 7027926 | B2 | 02-03-2022 |
| | | | | JP | 2019138682 | A | 22-08-2019 |
| | | | | US | 2019243213 | A1 | 08-08-2019 |
| EP 4343315 | A1 | | 27-03-2024 | CN | 117740774 | A | 22-03-2024 |
| | | | | EP | 4343315 | A1 | 27-03-2024 |
| | | | | JP | 2024043666 | A | 02-04-2024 |
| | | | | US | 2024094114 | A1 | 21-03-2024 |
| US 2019242830 | A1 | | 08-08-2019 | CN | 110118776 | A | 13-08-2019 |
| | | | | EP | 3524967 | A1 | 14-08-2019 |
| | | | | US | 2019242830 | A1 | 08-08-2019 |
| JP 2012058091 | A | | 22-03-2012 | NONE | | | |

EPO FORM P0459

For more details about this annex : see Official Journal of the European Patent Office, No. 12/82